(19) **Europäisches Patentamt / European Patent Office / Office européen des brevets**

(11) **EP 4 108 524 A1**

(12) **EUROPEAN PATENT APPLICATION**
published in accordance with Art. 153(4) EPC

(43) Date of publication:
28.12.2022 Bulletin 2022/52

(21) Application number: 21769002.3

(22) Date of filing: 28.01.2021

(51) International Patent Classification (IPC):
*B60R 16/023* (2006.01)

(52) Cooperative Patent Classification (CPC):
A63F 13/42; B60R 16/023; G06F 3/0488;
G06F 3/14

(86) International application number:
PCT/CN2021/074087

(87) International publication number:
WO 2021/179829 (16.09.2021 Gazette 2021/37)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 13.03.2020 CN 202010177769

(71) Applicant: Huawei Technologies Co., Ltd.
Shenzhen, Guangdong 518129, (CN)

(72) Inventors:
• LIN, Che
Shenzhen, Guangdong 518129 (CN)
• ZHOU, Yiyang
Shenzhen, Guangdong 518129 (CN)
• ZHANG, Kai
Shenzhen, Guangdong 518129 (CN)

(74) Representative: Grünecker Patent- und
Rechtsanwälte
PartG mbB
Leopoldstraße 4
80802 München (DE)

(54) **HUMAN-MACHINE INTERACTION METHOD AND DEVICE**

(57) This application relates to the field of electronic device technologies, and in particular, to a human-computer interaction method and a device. The method includes: A portable device receives a first touch operation performed on a first image, where the first touch operation is directly performed on an area outside a first functional area, and the first functional area is a functional area in the first image. The portable device sends first data to a large-screen device, where the first data includes image data generated by the portable device in response to a second touch operation, the second touch operation is an operation that is generated based on the first touch operation and that is directly performed on the first functional area, and the first data is used by the large-screen device to update the second image. In the method, a touch operation not directly performed on a functional area is converted into a touch operation directly performed on the functional area, to trigger a function of the functional area. Therefore, when viewing an image displayed on the large-screen device, a user can quickly and accurately operate an application on the portable device. This improves operation experience of head-up interaction.

FIG. 10

EP 4 108 524 A1

## Description

This application claims priority to Chinese Patent Application No. 202010177769.6, filed with the China National Intellectual Property Administration on March 13, 2020, and entitled "HUMAN-COMPUTER INTERACTION METHOD AND DEVICE", which is incorporated herein by reference in its entirety.

## TECHNICAL FIELD

This application relates to the field of electronic device technologies, and in particular, to a human-computer interaction method and a device.

## BACKGROUND

A smartphone has increasingly rich functions, and has become an important assistant or a necessity in lives and work of users. Relevant statistical organizations forecast that the inventory of smartphones will exceed 6 billion by 2020, and the average use time of smartphones will exceed 5 hours. With development of electronic device technologies and improvement of performance of hardware such as a system on chip (system on chip, SoC) and a display of a smartphone, high-quality mobile games emerge one after another. However, a user is quite less entertained by a game with excellent images when watching the game image on a small display of a mobile phone. Although a large-screen device such as a smart television can display game images in a large size, it is difficult for a player to play a game by touching the large-screen device.

Although an image displayed on a smartphone can be projected to a display of the smart television by using a projection technology to implement image linkage and synchronization between the smartphone and the smart television, when a game needs to be controlled, the player still needs to observe a display of the smartphone to calibrate a location of a finger touch. Therefore, during the game, the player cannot focus on the game images on the smart television, and has poor immersive experience in the game.

Currently, solutions for playing an electronic game on a smart television are as follows:

(1) Hardware, for example, a physical game controller or a hover touch sensor board, is introduced to implement head-up interaction. However, this solution costs high. In addition, the physical game controller has poor universality. The user needs to change an operation habit. This means poor operation convenience. When the hover touch sensor board is operated by the user, a hover event and a touch event simultaneously occur, causing poor reactions and a higher false touch rate.

(2) A virtual game controller application is run on a mobile phone. A display of the mobile phone gives no tactile feedback. Therefore, to complete an operation, the user still needs to switch viewing angles between a television and the mobile phone back and forth, resulting in poor immersive experience in a game.

Therefore, according to existing solutions, it is difficult for a user to implement head-up interaction with good operation experience and better immersive experience at a low cost.

## SUMMARY

Embodiments of this application provide a human-computer interaction method and a device, to quickly and accurately operate an application in absence of visual feedback.

According to a first aspect, a human-computer interaction method is provided. The method is executed by a first computer device. The first computer device is communicatively connected to a second computer device. The first computer device runs an application, and displays a first image of the application. The second computer device displays a second image of the application. Both the first image and the second image have one or more functional areas. The functional areas in the first image one-to-one correspond to the functional areas in the second image. The method includes: The first computer device receives a first touch operation performed on the first image, where the first touch operation is directly performed on an area outside a first functional area, and the first functional area is a functional area in the first image; and the first computer device generates, based on the first touch operation, a second touch operation directly performed on the first functional area, generates image data in response to the second touch operation, and sends the generated image data to the second computer device, so that the second computer device updates the second image based on the image data.

In other words, in the method provided in the first aspect, a computer device can convert a touch operation not directly performed on a functional area into a touch operation directly performed on the functional area, so that the computer device can be triggered to execute a corresponding function of the functional area, to generate image data.

The image data may be used for updating an image displayed on another computer device. Therefore, when viewing the image displayed on the another computer device, a user can quickly and accurately operate an application on a portable device. This improves operation experience of head-up interaction.

In some implementations, the first computer device is a portable device, for example, a mobile phone, a laptop computer, a tablet computer, or a game console. The second computer device is a large-screen device, for example, a smart television or a smart display. The large-screen device herein refers to a computer device whose display is larger than that of the portable device. A specific display size of the large-screen device is not limited in this application.

For ease of understanding, a scenario of interaction between the portable device and the large-screen device is used as an example for description in this application. However, the method in this application may also be applied to another scenario.

In a possible implementation, the first image and the second image may be completely the same, or may be different. For example, if the application is a game application, the first image includes only functional areas for operations, and the second image includes a game content image and functional areas. The functional areas in the first image one-to-one correspond to the functional areas in the second image, but display styles do not need to be completely the same. For example, to better present game content, the functional area in the second image may be displayed as transparent, or the functional area is displayed only when a function of the functional area is triggered.

In a possible implementation, there may be a plurality of functional areas. For example, the plurality of functional areas may be a plurality of independent areas. A shape of each area is not limited. Alternatively, the plurality of functional areas may be adjacently connected to each other. In another possible implementation, the functional area may alternatively be a continuous area. The area includes a plurality of functional units.

In a possible implementation, the second touch operation is a touch operation whose start point is in the first functional area. The first touch operation is a touch operation whose start point is not in the first functional area.

In a possible implementation, the first functional area includes one or more virtual keys. The touch operation directly performed on the first functional area refers to a touch operation (for example, pressing or sliding) directly performed on one or more of the one or more virtual keys. The touch operation not directly performed on the functional area is a touch operation other than the pressing operation. The virtual key herein includes but is not limited to a tap key, a double-tap key, a touch and hold key, a pressure-sensitive key, a key that supports another type of touch operation, or the like.

In a possible implementation, the touch operation directly performed on the area outside the first functional area is an operation whose start touch point is located in the area outside the first functional area. For example, the touch operation is a tap operation whose tapping location is located in the area outside the first functional area. For another example, the touch operation is a slide operation that is started from the area outside the first functional area. Correspondingly, the second touch operation directly performed on the first functional area equals to or is equivalent to an operation whose start touch point is located in the first functional area.

In other words, in this implementation, the operation whose start touch point is located in the area outside the first functional area may be converted into the operation whose start touch point is located in the first functional area, so that the portable device can be triggered to execute one or more corresponding functions of the first functional area.

In a possible implementation, the first image includes an auxiliary touch layer. The auxiliary touch layer is generated based on an image drawn and rendered by the application and a preset configuration file. The auxiliary touch layer has one or more auxiliary touch functional areas. The image drawn and rendered by the application has one or more functional areas. The auxiliary touch functional areas in the auxiliary touch layer one-to-one correspond to the functional areas in the image drawn and rendered by the application.

In other words, in this implementation, the portable device may display the auxiliary touch layer, so that the user quickly learns an operation manner in this embodiment of this application.

In a possible implementation, the first image is synthesized at least based on the image drawn and rendered by the application and the auxiliary touch layer. The auxiliary touch layer is generated based on the image drawn and rendered by the application and the preset configuration file. The auxiliary touch layer has one or more auxiliary touch functional areas. The image drawn and rendered by the application has one or more functional areas. The auxiliary touch functional areas in the auxiliary touch layer one-to-one correspond to the functional areas in the image drawn and rendered by the application.

In other words, in this implementation, the portable device may display the image that is synthesized based on the auxiliary touch layer and the image drawn and rendered by the application, so that the user quickly learns the operation manner in this embodiment of this application.

In a possible implementation, an initialization operation area may be set in the area outside the first functional area in the first image. The first touch operation is a slide operation that is started from the initialization operation area and that passes through or reaches the first functional area.

In other words, in this implementation, the portable device can be triggered, through a slide operation that is started from a specific area and passes through or reaches a functional area, to execute a function of the functional area. This reduces a misoperation and improves operation accuracy in absence of visual feedback.

In a possible implementation, dwell time of the slide operation in the first functional area is greater than a dwell time threshold.

In other words, in this implementation, the portable device may determine, based on the dwell time of the slide operation in the functional area, whether to execute a function of the functional area. This can reduce a misoperation and improve operation accuracy in absence of visual feedback.

In a possible implementation, a sliding speed of the slide operation in the first functional area is less than a sliding speed threshold.

In other words, in this implementation, the portable device may determine, based on the sliding speed of the slide operation in the functional area, whether to execute a function of the functional area. This can reduce a misoperation and improve operation accuracy in absence of visual feedback.

In a possible implementation, a gesture operation area may be set in the area outside the first functional area in the first image. The first touch operation is a touch operation performed on the gesture operation area.

This implementation may be specific to a case in which a distance between the first functional area and the gesture operation area is large (for example, greater than a distance threshold), and/or a size of the first functional area is small (less than a size threshold). Specifically, in this implementation, the portable device can be triggered, through an operation performed on a specific area, to execute a function of a long-distance small-sized functional area. Compared with a case that the portable device is triggered, through tapping on the long-distance small-sized functional area, to execute the function of the long-distance small-sized functional area, this case has higher operation accuracy and shorter operation time.

In a possible implementation, a frequent operation area may be set in the first image based on historical touch operation data. The frequent operation area may be an area in which a quantity of touch operations is large (for example, greater than a specific threshold) in unit time, where the quantity of touch operations is obtained through calculation based on the historical touch operation data. It should be understood that the frequent operation area usually includes a functional area. An area that is in the frequent operation area and that is outside the functional area is a first area. The first touch operation is performed on the first area. A closeness degree of association between the first touch operation and the first functional area is greater than a closeness degree of association between the first touch operation and another functional area. The another functional area is a functional area, other than the first functional area, of the functional areas in the first image.

In other words, in this implementation, the portable device may determine a closeness degree of association between an operation performed on a specific area and each functional area, and execute a function of a functional area corresponding to a largest closeness degree of association. This can improve operation accuracy of the frequent operation functional area.

In a possible implementation, a closeness degree of association between the first touch operation and the first functional area is positively correlated to a size of the first functional area and negatively correlated to a first distance. The first distance is a distance between a touch point of the first touch operation and the first functional area.

In other words, in this implementation, the closeness degree of association between the touch operation and the functional area may be determined based on the size of the functional area and the distance between the touch point of the touch operation and the functional area. This reduces a misoperation.

In a possible implementation, the second image includes a touch point of the first touch operation.

In other words, in this implementation, the large-screen device may display the touch point of the touch operation. Therefore, the user can learn a touch position of a touch object (for example, a finger or a stylus) by viewing the image displayed on the large-screen device. Particularly, when the touch operation is the slide operation, a sliding track can be seen due to persistence of vision effect of human eyes, so that the user learns the touch position of the touch object, and accordingly determines a subsequent sliding direction or sliding speed. This improves accuracy of the operation and improves operation experience of head-up interaction.

According to a second aspect, a human-computer interaction method is provided. The method is executed by a large-screen device. The large-screen device is communicatively connected to a portable device. The portable device displays a first image of an application. The large-screen device runs the application, and displays a second image of the application. Both the first image and the second image have one or more functional areas. The functional areas in the first image one-to-one correspond to the functional areas in the second image. The method includes: The large-screen device receives touch information from the portable device, where the touch information represents a first touch operation performed on the first image, the first touch operation is directly performed on an area outside a first functional area, and the first functional area is a functional area in the first image; the large-screen device generates, based on the touch information, a second touch operation directly performed on the first functional area, and generates an image in response to the second touch operation; and the large-screen device displays the generated image to update the second image.

In other words, in the method provided in the first aspect, the large-screen device can convert a touch operation not directly performed on a functional area into a touch operation directly performed on the functional area, so that the large-screen device can be triggered to execute a corresponding function of the functional area, to generate an image for updating an image displayed on the large-screen device. Therefore, when viewing the image displayed on the large-screen device, a user can quickly and accurately operate an application on the portable device. This improves operation experience of head-up interaction.

In some implementations, the large-screen device may also display a touch point corresponding to the first touch operation. Therefore, the user can learn a touch position of a touch object (for example, a finger or a stylus) by viewing the image displayed on the large-screen device.

According to a third aspect, a portable device is provided, including a processor, a communication interface, and a touchscreen. The communication interface is configured to communicate with a large-screen device. The processor is configured to run an application, and instruct the touchscreen to display a first image of the application. The large-screen device displays a second image of the application. Both the first image and the second image have one or more functional areas. The functional areas in the first image one-to-one correspond to the functional areas in the second image. The processor is further configured to instruct the touchscreen to receive a first touch operation performed on the first image. The first touch operation is directly performed on an area outside a first functional area. The first functional area is a functional area in the first image. The processor is further configured to instruct the communication interface to send first data to the large-screen device. The first data includes image data generated by the portable device in response to a second touch operation. The second touch operation is an operation that is generated based on the first touch operation and that is directly performed on the first functional area. The first data is used by the large-screen device to update the second image.

In a possible implementation, the first image includes an initialization operation area. The initialization operation area is an area outside the first functional area. The first touch operation is a slide operation that is started from the initialization operation area. The slide operation passes through or reaches the first functional area.

In a possible implementation, dwell time of the slide operation in the first functional area is greater than a dwell time threshold.

In a possible implementation, a sliding speed of the slide operation in the first functional area is less than a sliding speed threshold.

In a possible implementation, the first image includes a gesture operation area. The gesture operation area is an area outside the first functional area. The first touch operation is a touch operation performed on the gesture operation area. A distance between the first functional area and the gesture operation area is greater than a distance threshold, and/or a size of the first functional area is less than a size threshold.

In a possible implementation, the first image includes a frequent operation area. The frequent operation area is obtained based on historical touch operation data. The first touch operation is performed on a first area. The first area is an area of the frequent operation area except a functional area. A closeness degree of association between the first touch operation and the first functional area is greater than a closeness degree of association between the first touch operation and another functional area. The another functional area is a functional area, other than the first functional area, of the functional areas in the first image.

In a possible implementation, the closeness degree of association between the first touch operation and the first functional area is positively correlated to a size of the first functional area and negatively correlated to a first distance. The first distance is a distance between a touch point of the first touch operation and the first functional area.

In a possible implementation, the second image includes a touch point of the first touch operation.

It may be understood that the portable device provided in the third aspect is configured to perform the method provided in any one of the first aspect or the implementations of the first aspect. Therefore, for beneficial effects that can be achieved by the portable device, refer to the foregoing corresponding beneficial effects.

According to a fourth aspect, a computer device such as a large-screen device is provided. The computer device includes a processor, a communication interface, and a display. The communication interface is configured to connect to a portable device. The portable device displays a first image of an application. The processor runs the application, and instructs the display to display a second image of the application. Both the first image and the second image have one or more functional areas. The functional areas in the first image one-to-one correspond to the functional areas in the second image. The processor is further configured to instruct the communication interface to receive touch information from the portable device. The touch information represents a first touch operation performed on the first image. The first touch operation is directly performed on an area outside a first functional area. The first functional area is a functional area in the first image. The processor is configured to instruct the display to update the second image. An updated second image is an image generated by the large-screen device in response to a second touch operation. The second touch operation is an operation that is generated based on the touch information and that is directly performed on the first functional area.

It may be understood that the computer device provided in the fourth aspect is configured to perform the method provided in any one of the second aspect or the implementations of the second aspect. Therefore, for beneficial effects that can be achieved by the computer device, refer to the foregoing corresponding beneficial effects.

According to a fifth aspect, a human-computer interaction apparatus is provided. A portable device is provided with the apparatus. The portable device is communicatively connected to a large-screen device. The portable device runs an application, and displays a first image of the application. The large-screen device displays a second image of the application. Both the first image and the second image have one or more functional areas. The functional areas in the first image one-to-one correspond to the functional areas in the second image. The apparatus includes a receiving unit and a sending unit. The receiving unit is configured to receive a first touch operation performed on the first image. The first touch operation is directly performed on an area outside a first functional area. The first functional area is a functional area in the first image. The sending unit is configured to send first data to the large-screen device. The first data includes image data generated by the portable device in response to a second touch operation. The second touch operation is an operation that is generated based on the first touch operation and that is directly performed on the first functional area. The first data is used by the large-screen device to update the second image.

In a possible implementation, the first image includes an initialization operation area. The initialization operation area is an area outside the first functional area. The first touch operation is a slide operation that is started from the initialization operation area. The slide operation passes through or reaches the first functional area.

In a possible implementation, dwell time of the slide operation in the first functional area is greater than a dwell time threshold.

In a possible implementation, a sliding speed of the slide operation in the first functional area is less than a sliding speed threshold.

In a possible implementation, the first image includes a gesture operation area. The gesture operation area is an area outside the first functional area. The first touch operation is a touch operation performed on the gesture operation area. A distance between the first functional area and the gesture operation area is greater than a distance threshold, and/or a size of the first functional area is less than a size threshold.

In a possible implementation, the first image includes a frequent operation area. The frequent operation area is obtained based on historical touch operation data. The first touch operation is performed on a first area. The first area is an area of the frequent operation area except a functional area. A closeness degree of association between the first touch operation and the first functional area is greater than a closeness degree of association between the first touch operation and another functional area. The another functional area is a functional area, other than the first functional area, of the functional areas in the first image.

In a possible implementation, the closeness degree of association between the first touch operation and the first functional area is positively correlated to a size of the first functional area and negatively correlated to a first distance. The first distance is a distance between a touch point of the first touch operation and the first functional area.

In a possible implementation, the second image includes a touch point of the first touch operation.

It may be understood that the human-computer interaction apparatus provided in the fifth aspect is configured to perform the method provided in the first aspect. Therefore, for beneficial effects that can be achieved by the human-computer interaction apparatus, refer to the foregoing corresponding beneficial effects.

According to a sixth aspect, a human-computer interaction apparatus is provided. A large-screen device is provided with the apparatus. The large-screen device is communicatively connected to a portable device. The portable device displays a first image of an application. The large-screen device runs the application, and displays a second image of the application. Both the first image and the second image have one or more functional areas. The functional areas in the first image one-to-one correspond to the functional areas in the second image. The apparatus includes a receiving unit and an updating unit. The receiving unit is configured to receive touch information from the portable device. The touch information represents a first touch operation performed on the first image. The first touch operation is directly performed on an area outside a first functional area. The first functional area is a functional area in the first image. The updating unit is configured to update the second image. An updated second image is an image generated by the large-screen device in response to a second touch operation. The second touch operation is an operation that is generated based on the touch information and that is directly performed on the first functional area.

It may be understood that the human-computer interaction apparatus provided in the sixth aspect is configured to perform the method provided in any one of the second aspect or the implementations of the second aspect. Therefore, for beneficial effects that can be achieved by the human-computer interaction apparatus, refer to the foregoing corresponding beneficial effects.

According to a seventh aspect, a computer storage medium is provided. The computer storage medium includes computer instructions. When the computer instructions are run on an electronic device, the electronic device is enabled to perform the method according to any one of the first aspect or the implementations of the first aspect. In addition, this application further provides a computer storage medium, configured to implement the method provided in any one of the second aspect or the implementations of the second aspect.

According to an eighth aspect, a computer program product is provided. When program code included in the computer program product is executed by a processor in an electronic device, the method provided in any one of the first aspect or the implementations of the first aspect is implemented. In addition, this application further provides a computer program product, configured to implement the method provided in any one of the second aspect or the implementations of the second aspect.

According to the human-computer interaction method and the device provided in embodiments of this application, a touch operation not directly performed on a functional area can be converted into a touch operation directly performed on the functional area, so that a corresponding function of the functional area can be triggered, to generate image data. The image data may be used for updating an image displayed on the large-screen device. Therefore, when viewing the image displayed on the large-screen device, a user can quickly and accurately operate an application on the portable device. This improves operation experience of head-up interaction.

## BRIEF DESCRIPTION OF DRAWINGS

FIG. 1 is a schematic diagram of a structure of a projection system according to an embodiment of this application;
FIG. 2 is a schematic diagram of a hardware structure of a portable device according to an embodiment of this application;
FIG. 3 is a schematic diagram of a hardware structure of a large-screen device according to an embodiment of this application;
FIG. 4A is a schematic diagram of a software structure of a portable device according to an embodiment of this application;
FIG. 4B is a schematic diagram of a software structure of a portable device according to an embodiment of this application;
FIG. 4C is a schematic diagram of a software structure of a large-screen device according to an embodiment of this application;
FIG. 5A is a schematic diagram of an application screen according to an embodiment of this application;
FIG. 5B is a schematic diagram of an auxiliary touch layer according to an embodiment of this application;
FIG. 5C is a schematic diagram of an auxiliary touch layer according to an embodiment of this application;
FIG. 5D is a schematic diagram of a screen formed by combining an application screen and an auxiliary touch layer according to an embodiment of this application;
FIG. 5E is a schematic diagram of a screen formed by combining an application screen and an auxiliary touch layer according to an embodiment of this application;
FIG. 5F is a schematic diagram of an auxiliary touch layer according to an embodiment of this application;
FIG. 5G is a schematic diagram of a screen formed by combining an application screen and an auxiliary touch layer according to an embodiment of this application;
FIG. 6 is a schematic diagram of an event sequence of a slide operation according to an embodiment of this application;
FIG. 7A is a schematic diagram of setting a configuration file according to an embodiment of this application;
FIG. 7B is a schematic diagram of determining ROI layout information in a plurality of scenarios of an application according to an embodiment of this application;
FIG. 7C is a schematic diagram of determining a frequent operation area in a plurality of scenarios of an application according to an embodiment of this application;
FIG. 7D is a schematic diagram of generating and managing a configuration file according to an embodiment of this application;
FIG. 8A is a schematic diagram of function division of an enhanced service module according to an embodiment of this application;
FIG. 8B is a schematic diagram of generating an auxiliary touch layer according to an embodiment of this application;
FIG. 8C shows an enhanced policy algorithm according to an embodiment of this application;
FIG. 9A is a schematic diagram of triggering a down event through a slide operation according to an embodiment of this application;
FIG. 9B is a schematic diagram of triggering a down event for a long-distance small-sized ROI through a slide operation according to an embodiment of this application;
FIG. 9C is a schematic diagram of triggering a down event through a shortcut gesture according to an embodiment of this application;
FIG. 10 is a flowchart of a human-computer interaction method according to an embodiment of this application;
FIG. 11 is a flowchart of another human-computer interaction method according to an embodiment of this application;
FIG. 12 is a schematic block diagram of a human-computer interaction apparatus according to an embodiment of this application;

FIG. 13 is a schematic block diagram of another human-computer interaction apparatus according to an embodiment of this application;

FIG. 14 is a schematic diagram of a structure of a portable device according to an embodiment of this application; and

FIG. 15 is a schematic diagram of a structure of a large-screen device according to an embodiment of this application.

## DESCRIPTION OF EMBODIMENTS

The following describes technical solutions in embodiments of the present invention with reference to accompanying drawings. It is clear that the described embodiments are merely some but not all of embodiments of this application.

In the descriptions of this specification, "an embodiment", "some embodiments", or the like indicates that one or more embodiments of this application include a specific feature, structure, or characteristic described with reference to embodiments. Therefore, statements such as "in one embodiment", "in some embodiments", "in some other embodiments", and "in still some other embodiments" that appear at different places in this specification do not necessarily refer to a same embodiment, but mean "one or more but not all embodiments", unless otherwise specially emphasized in another manner.

In the descriptions of this specification, "/" means "or" unless otherwise specified. For example, A/B may represent A or B. In this specification, "and/or" describes only an association relationship between associated objects and represents that three relationships may exist. For example, A and/or B may represent the following three cases: Only A exists, both A and B exist, and only B exists. In addition, in the descriptions in embodiments of this application, "a plurality of' means two or more.

The terms "first" and "second" in the descriptions of this specification are merely intended for a purpose of description, and shall not be understood as an indication or implication of relative importance or implicit indication of a quantity of indicated technical features. Therefore, a feature limited by "first" or "second" may explicitly or implicitly include one or more features. The terms "comprise", "include", "have", and other variants thereof all mean "include but is not limited to", unless otherwise specifically emphasized in another manner.

Generally, after a game screen of a game application running on a mobile phone is projected to a large-screen device, the large-screen device is only used as a larger carrier for displaying a game image. A mobile phone game still keeps original operation logic that a user performs a touch operation on a mobile phone side to control the game application. Generally, the user needs to tap a region of interest (region of interest, ROI) (which may also be referred to as a functional area, and may be a virtual control key or area on the screen) on the game screen to control a game. This may lead to the following problems.

Problem 1: The user watches a touchscreen of the mobile phone when performing the touch operation. In other words, when operating the game, the user switches viewing angles between the mobile phone and the large-screen device. In this case, head-up interaction cannot be implemented, and the user has poor immersive experience in the game.

If the user keeps watching the large-screen device when performing the touch operation, the user cannot perceive a specific location of a finger of the user on the mobile phone side, and therefore cannot accurately touch the ROI on the game screen. Generally, in a touch operation on a specific ROI, a finger hovers and the user presses down the ROI with the finger. It may be understood that when the user watches the touchscreen of the mobile phone to perform the touch operation, the user may usually accurately touch the functional area that the user wants to touch. However, because the user does not stare at the touchscreen, visual feedback is absent. Therefore, before the user touches the touchscreen of the mobile phone, it is difficult for the user to perceive a location of the finger relative to the functional area, and touch effect can be perceived only after the finger touches the touchscreen of the mobile phone. This means poor touch accuracy: A non-functional area is usually touched, causing an invalid operation, or another functional area is touched, causing a misoperation. Specifically, the game screen generally has a plurality of functional areas. The plurality of functional areas are distributed in various places on the game screen, resulting in frequent misoperations and invalid operations.

Problem 2: A long-distance small-sized ROI generally exists on the game screen. It may be understood that when properly operating the game, the user usually holds the mobile phone with fingers other than a thumb, and taps the ROI with the thumb to operate the game. The long-distance ROI herein is an ROI that is on the game screen and that is far away from the thumb when the user properly controls the game. If the user wants to tap the long-distance ROI, the thumb needs to move for a long distance to touch the ROI.

It is difficult to accurately tap the long-distance small-sized ROI, and it takes a long time for the finger to reach the ROI. According to the Fitts' law, time required for tapping a target ROI by the user is: $T=a+b\log_2(1+D/W)$, where D is a distance between the target ROI and a current location of a finger (the finger is a finger for touching the target ROI) of the user, and W is a size of the target ROI, a and b are constant parameters. It may be learned that the time T required for tapping a target that is far away from the current location of the finger (large D) and has a small size (small W) is long. Therefore, how to quickly and accurately tap the long-distance small-sized ROI is also a problem that needs to be considered during game experience optimization.

Problem 3: Based on big data statistics of game operations, the game generally has one or more high-trigger-frequency keys (namely, frequent operation ROIs on the game screen), for example, ROIs such as an attack key, a turret destroy key, and a last hit key in a multiplayer online battle arena (multiplayer online battle arena, MOBA). When playing the game, the user performs most operations on an area in or near the frequent operation ROI. Even when watching the mobile phone, the user is likely to inaccurately tap the frequent operation ROI. Especially, a speed of tapping the ROI is a key factor that affects game experience. Therefore, the game experience of the user is severely affected if the tapping speed is sacrificed to ensure tapping accuracy. When the user does not watch the mobile phone, the foregoing problem is more serious.

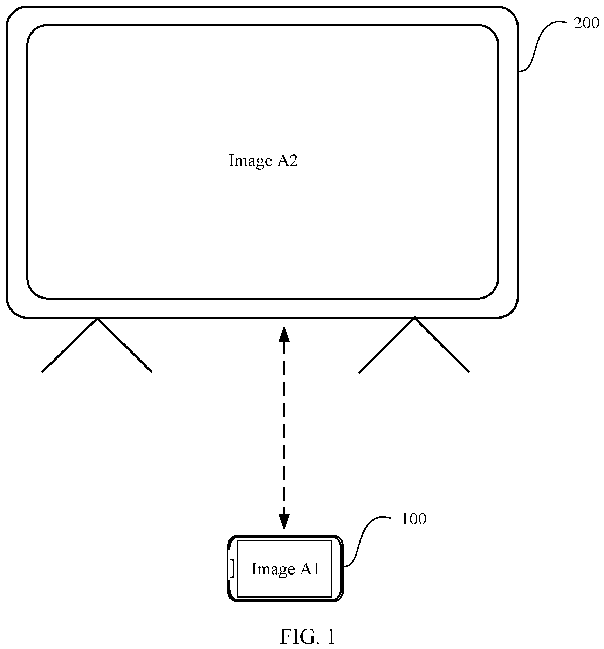

As shown in FIG. 1, an embodiment of this application provides a human-computer interaction system. The system may include a portable device 100 and a large-screen device 200. The portable device 100 or the large-screen device 200 may run an application A. The application A may be an application of a game (for example, a MOBA game), an e-book application, a small video (or fast video) application, an instant messaging application, or the like. Details are not described herein again.

The large-screen device 200 may display an image A2. The image A2 includes a running image of the application A, so that a user watches the running image of the application A on a large display. In this specification, the running image is an image drawn and rendered by the application A. It may be understood that when an application such as a game application runs on an electronic device, an image may be drawn and rendered by using a computing resource provided by the electronic device, and the drawn and rendered image is transferred to an operating system of the electronic device, so that the image is displayed on a display of the electronic device.

For example, when the application A runs on the portable device 100, the image A2 may be displayed on a display of the large-screen device 200 in a projection (for example, Miracast) manner.

For example, when the application A runs on the large-screen device 200, the image A2 may be locally displayed on the display of the large-screen device 200.

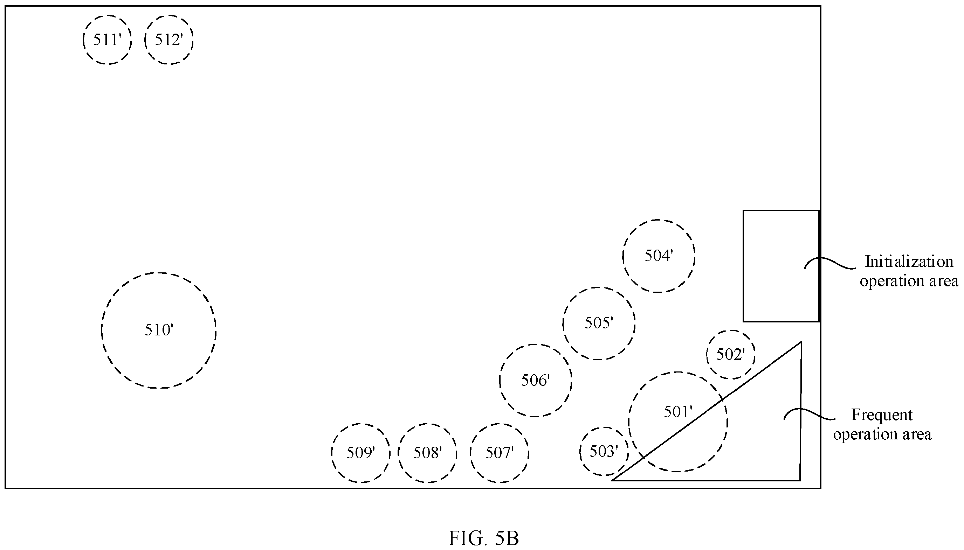

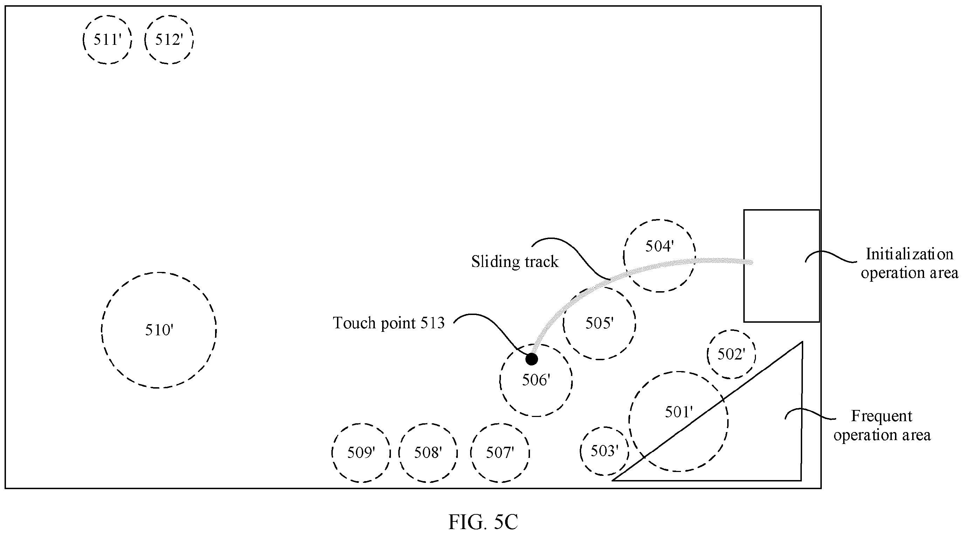

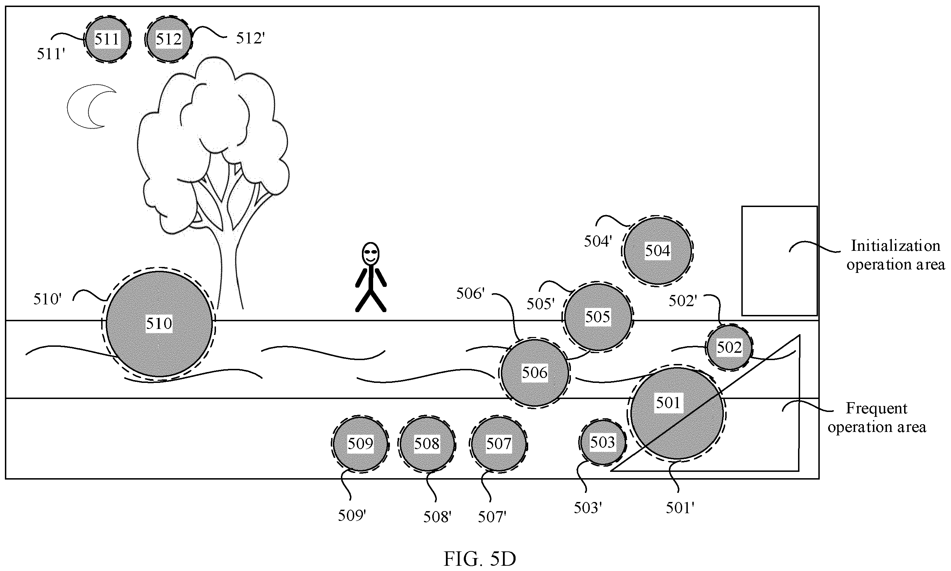

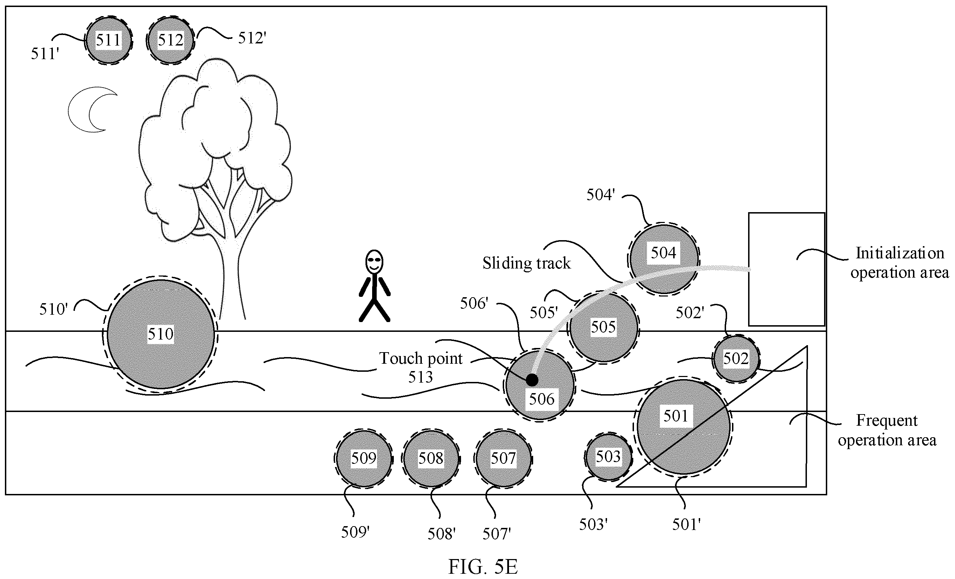

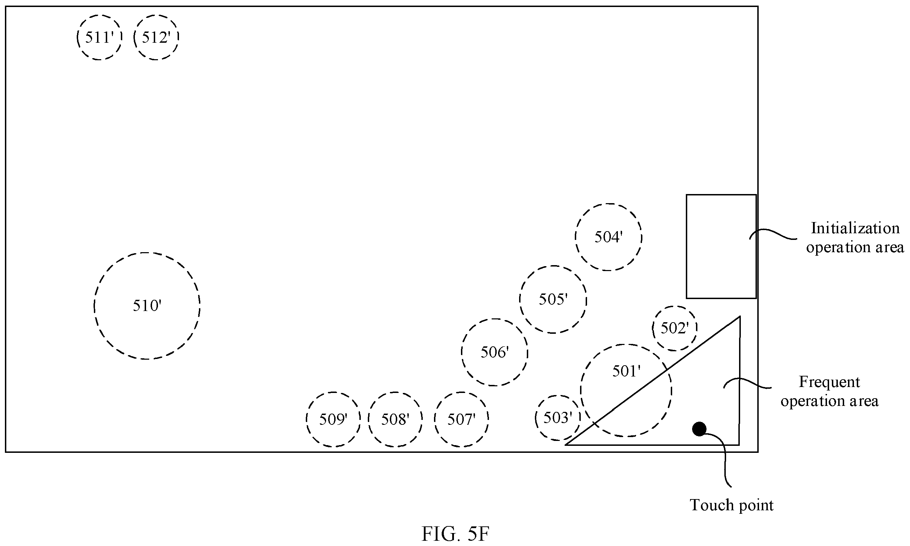

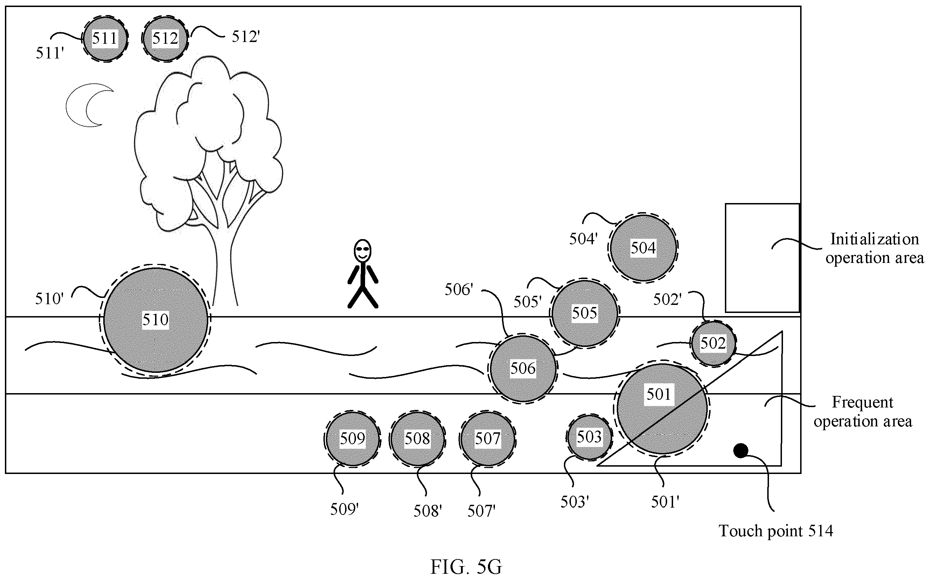

The portable device 100 may display an image A1. For example, the image A1 may be shown in FIG. 5B, FIG. 5C, FIG. 5D, FIG. 5E, FIG. 5F, or FIG. 5G. The image A1 may include at least one auxiliary touch ROI (the ROI may also be referred to as a functional area). The at least one auxiliary touch ROI one-to-one corresponds to at least one ROI in the running image of the application A. An operating system of the portable device 100 may receive a touch operation performed on the image A1, so that the user controls running of the application A.

When the application A runs on the portable device 100, when the touch operation is directly performed on an area outside the ROI in the image A1, the operating system of the portable device 100 determines or recognizes the touch operation, to determine a target ROI for the touch operation. If the target ROI for the touch operation is recognized, the portable device 100 may generate a touch event (for example, a down (down) event) for the target ROI, and transfer the touch event to the application A, so that the application A performs a function of the target ROI. The touch operation directly performed on the area outside the ROI on the screen may also be referred to as a touch operation not directly performed on the ROI. For example, the touch operation not directly performed on the ROI may be an operation whose start touch point is located in the area outside the ROI, for example, a tap operation whose tapping location is not located in the ROI, or a slide operation whose start touch point is not located in the ROI. The ROI herein may be any ROI on the screen. In other words, the touch operation not directly performed on the ROI may be a touch operation not directly performed on any ROI on the screen.

For example, as described in the foregoing description of the problem 1, based on an existing operation manner, when the user wants to touch a specific ROI, the finger hovers and the user presses down the ROI with the finger. In this manner, tapping accuracy and touch accuracy are poor without the aid of eyes. In the solution provided in this embodiment of this application, a slide operation starting from a specific location may be converted into a touch operation directly performed on an ROI, to trigger a function of the ROI. This resolves a problem that it is difficult for the user to determine a hovering location of the finger and perform accurate tapping without the aid of eyes. For example, the touch operation directly performed on the ROI is an operation generated by the portable device 100, and equals to or is equivalent to an operation whose start touch point is located in the ROI.

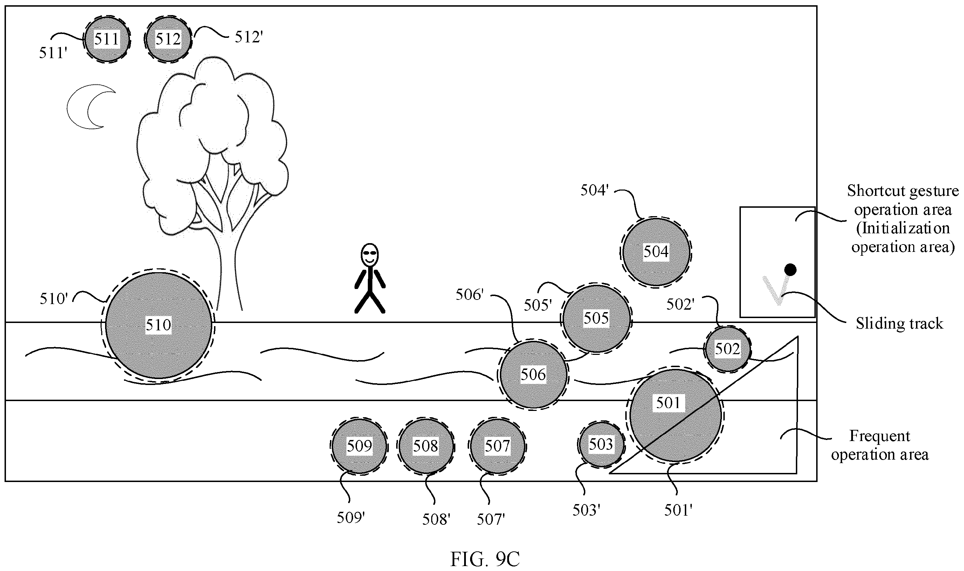

Specifically, as shown in FIG. 5C or FIG. 5E, the image A1 may include an initialization operation area. There is no overlapping area between the initialization operation area and the ROI. When the touch operation not directly performed on the ROI is a slide operation starting from the initialization operation area, the portable device 100 may determine a target ROI for the slide operation. When or after the target ROI is determined, a touch event (for example, a down event) for the target ROI may be generated, to trigger a corresponding function of the target ROI. For example, as described in the foregoing description of the problem 2, it is usually difficult for the user to accurately and quickly tap a long-distance small-sized ROI. Therefore, in the solution provided in this embodiment of this application, as shown in FIG. 9C, the image A1 may include a shortcut gesture operation area and a plurality of ROIs. There is no overlapping area between the shortcut gesture operation area and the ROI. The shortcut gesture operation area may also be referred to as a gesture operation area for short. At least one shortcut gesture may be preset. Each shortcut gesture is corresponding to one ROI. An ROI corresponding to the shortcut gesture may be a long-distance ROI, a small-sized ROI, or a long-distance small-sized ROI. The long-distance ROI may be an ROI whose distance to the shortcut gesture operation area is greater than a distance threshold D1. The small-sized ROI may be an ROI whose size is less than a size threshold W1. The long-distance small-sized ROI may be an ROI whose distance to the shortcut gesture operation area is greater than a distance threshold D2 and whose size is less than a size threshold W2. The distance threshold D1 and the distance threshold D2 may be the same, or may be different. The size threshold W1 and the size threshold W2 may be the same, or may be different. The distance threshold D1, the distance threshold D2, the size threshold W1, and the size threshold W2 may be preset based on experience. In the solution provided in this embodiment of this application, a shortcut gesture for a slide operation performed on the shortcut gesture operation area may be determined, and an ROI corresponding to the determined shortcut gesture is used as a target ROI corresponding to the slide operation, so that the slide operation is converted into an operation directly performed on the target ROI, to trigger a function of the target ROI. This may further resolve a problem of inaccurate tapping, especially inaccurate tapping and long tapping time of a long-distance small-sized ROI.

For example, as described in the foregoing description of the problem 3, tap operations on a frequent ROI are usually inaccurate. Therefore, in this embodiment of this application, a touch operation performed on an area near the frequent ROI may be converted into a touch operation directly performed on the frequent ROI. Specifically, as shown in FIG. 5F or FIG. 5G, the image A1 may include a frequent operation area. The frequent operation area may include an attract area. There is no overlapping area between the attract area and the ROI. When the touch operation not directly performed on the ROI is a touch operation performed on the attract area, a target ROI for the touch operation may be determined by using a preset algorithm. When or after the target ROI is determined, a touch event (for example, a down event) for the target ROI may be generated, to trigger a corresponding function of the target ROI. The frequent operation area may be an area in or near the frequent operation ROI, and may be determined based on historical touch operation data (user touch big data). Details are described below and not described herein again.

When the application A runs on the large-screen device 200, the large-screen device 200 may receive a touch operation (specifically, may receive a touch event, where the touch event is a touch event that is triggered through a touch operation performed on an auxiliary touch layer) from the portable device 100. When the touch operation is an operation not directly performed on an ROI, an operating system of the large-screen device 200 determines or recognizes the touch operation, to determine a target ROI based on the touch operation. For details, refer to the foregoing description of determining, by the portable device 100, the target ROI for the operation not directly performed on the ROI. Details are not described herein again.

The portable device 100 may be a portable device such as a mobile phone, a tablet computer, a digital camera, a personal digital assistant (personal digital assistant, PDA), a wearable device, or a laptop (laptop). An example embodiment of the portable device includes but is not limited to a portable device using iOS, Android, Windows, or another operating system. The portable device may alternatively be another portable device, for example, a laptop (laptop) with a touch-sensitive surface (for example, a touch panel). A type of the portable device is not specifically limited in this embodiment of this application.

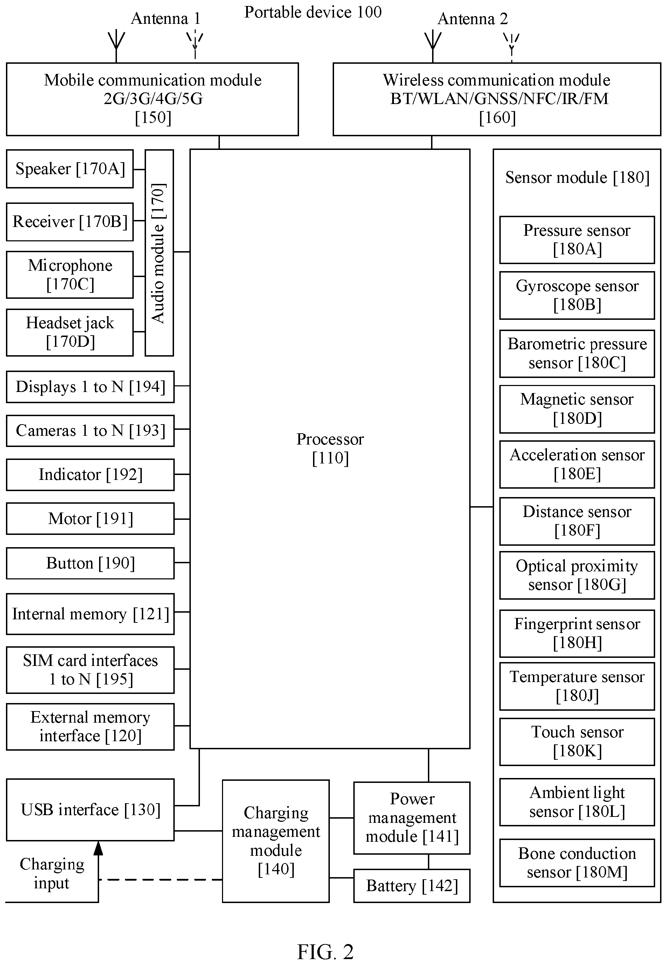

FIG. 2 is a schematic diagram of a structure of the portable device 100.

The portable device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the portable device 100. In some other embodiments of this application, the portable device 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store an instruction or data that has been used or is cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the portable device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be configured to perform audio communication, and sample, quantize, and code an analog signal. In some embodiments, the audio module 170 may be coupled to the wireless communication module 160 through the PCM bus interface. In some embodiments, the audio module 170 may also transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI, to implement a photographing function of the portable device 100. The processor 110 communicates with the display 194 through the DSI interface, to implement a display function of the portable device 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB type-C interface, or the like. The USB interface 130 may be configured to connect to a charger to charge the portable device 100, or may be configured to transmit data between the portable device 100 and a peripheral device, or may be configured to connect to a headset for playing audio through the headset. The interface may be further configured to connect to another electronic device such as an AR device.

It may be understood that an interface connection relationship between the modules that is shown in this embodiment of the present invention is merely an example for description, and does not constitute a limitation on the structure of the portable device 100. In some other embodiments of this application, the portable device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the portable device 100. The charging management module 140 supplies power to the electronic device through the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the portable device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the portable device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a solution that is applied to the portable device 100 and that includes wireless communication such as 2G, 3G, 4G, and 5G. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by an audio device (which is not limited to the speaker 170A, the receiver 170B, or the like), or displays an image or a video by the display 194. In some embodiments, the modem processor may be an independent component. In some other embodiments, the modem processor may be independent of the processor 110, and is disposed in a same device as the mobile communication module 150 or another functional module.

The wireless communication module 160 may provide a solution, applied to the portable device 100, to wireless communication including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more components integrating at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

The portable device 100 may exchange data with the large-screen device 200 by using a wireless communication solution (for example, a Wi-Fi network solution or a Bluetooth solution) provided by the wireless communication module 160, for example, send image data to the large-screen device 200, or receive image data from the large-screen device 200, or send touch information to the large-screen device 200.

In some embodiments, in the portable device 100, the antenna 1 and the mobile communication module 150 are coupled, and the antenna 2 and the wireless communication module 160 are coupled, so that the portable device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a beidou navigation satellite system (beidou navigation satellite system, BDS), a quasi-zenith satellite system (quasi-zenith satellite system, QZSS), and/or a satellite based augmentation system (satellite based augmentation system, SBAS).

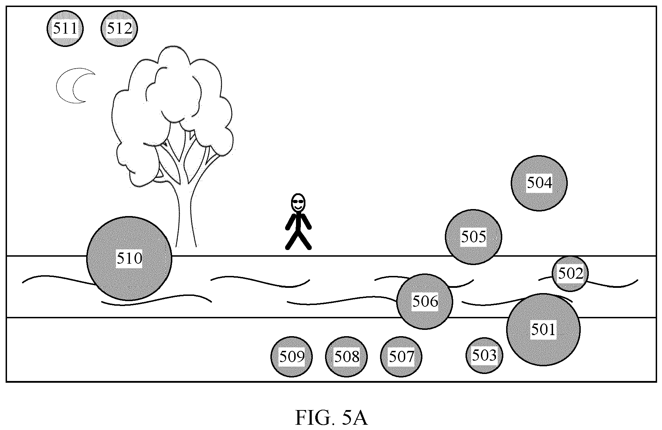

The portable device 100 may implement a display function through the GPU, the display 194, the application processor, and the like. The GPU is a microprocessor for image processing, and is connected to the display 194 and the application processor. The GPU is configured to perform mathematical and geometric computation, and render an image. The processor 110 may include one or more GPUs, which execute program instructions to generate or change display information. In some embodiments, when the application A runs on the portable device 100, the application A may invoke the GPU, the application processor, and the like to draw and render a running image (for example, as shown in FIG. 5A). The operating system of the portable device 100 may invoke the GPU, the application processor, and the like to draw and render an auxiliary touch layer. The operating system of the portable device 100 may invoke the application processor and the like, to synthesize an image based on the running image and the auxiliary touch layer. Details are described below and not described herein again.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the portable device 100 may include one or N displays 194, where N is a positive integer greater than 1. In some embodiments, the portable device 100 may display the image A1 (for example, as shown in any one of FIG. 5B to FIG. 5G) by using the display 194.

The portable device 100 may implement a photographing function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the portable device 100 may include one or N cameras 193, where N is a positive integer greater than 1.

The digital signal processor is configured to process a digital signal, and may process another digital signal in addition to the digital image signal. For example, when the portable device 100 selects a frequency, the digital signal processor is configured to perform Fourier transform or the like on frequency energy.

The video codec is configured to compress or decompress a digital video. The portable device 100 may support one or more video codecs. In this way, the portable device 100 may play back or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information by referring to a structure of a biological neural network, for example, a transfer mode between human brain neurons, and may further continuously perform self-learning. Applications such as intelligent cognition of the portable device 100 may be implemented through the NPU, for example, image recognition, facial recognition, speech recognition, and text understanding.

The external memory interface 120 may be configured to connect to an external storage card, for example, a micro SD card, to extend a storage capability of the portable device 100. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The internal memory 121 may include a program storage area and a data storage area. The program storage area may store an operating system, an application required by at least one function (for example, a voice playing function or an image playing function), and the like. The data storage area may store data (for example, audio data and an address book) and the like created during use of the portable device 100. In addition, the internal memory 121 may include a high-speed random access memory, or may include a nonvolatile memory, for example, at least one magnetic disk storage device, a flash memory, or a universal flash storage (universal flash storage, UFS). The processor 110 runs instructions stored in the internal memory 121 and/or instructions stored in the memory disposed in the processor, to perform various function applications and data processing of the portable device 100.

The portable device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The portable device 100 may be used for listening to music or answering a call in a hands-free mode over the speaker 170A.

The receiver 170B, also referred to as an "earpiece", is configured to convert an audio electrical signal into a sound signal. When a call is answered or a voice message is received through the portable device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the portable device 100. In some other embodiments, two microphones 170C may be disposed in the portable device 100, to collect a sound signal and implement a noise reduction function. In some other embodiments, three, four, or more microphones 170C may alternatively be disposed in the portable device 100, to collect a sound signal and implement noise reduction, and recognize a sound source and implement a directional recording function and the like.

The headset jack 170D is configured to connect to a wired headset. The headset jack 170D may be the USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and may convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The portable device 100 determines pressure intensity based on the change in the capacitance. When a touch operation is performed on the display 194, the portable device 100 detects intensity of the touch operation by using the pressure sensor 180A. The portable device 100 may also calculate a touch location based on a detection signal of the pressure sensor 180A. In some embodiments, touch operations that are performed on a same touch location but have different touch operation intensity may correspond to different operation instructions. For example, when a touch operation whose touch operation intensity is less than a first pressure threshold is performed on an SMS message application icon, an instruction for viewing an SMS message is performed. When a touch operation whose touch operation intensity is greater than or equal to the first pressure threshold is performed on the SMS message application icon, an instruction for creating an SMS message is performed.

The gyroscope sensor 180B may be configured to determine a moving posture of the portable device 100. In some embodiments, an angular velocity of the portable device 100 around three axes (namely, axes x, y, and z) may be determined by using the gyroscope sensor 180B. The gyroscope sensor 180B may be configured to implement image stabilization during photographing. For example, when the shutter is pressed, the gyroscope sensor 180B detects an angle at which the portable device 100 jitters, calculates, based on the angle, a distance for which a lens module needs to compensate, and allows the lens to cancel the jitter of the portable device 100 through reverse motion, to implement image stabilization. The gyroscope sensor 180B may also be used in a navigation scenario and a somatic game scenario.

The barometric pressure sensor 180C is configured to measure barometric pressure. In some embodiments, the portable device 100 calculates an altitude through the barometric pressure measured by the barometric pressure sensor 180C, to assist in positioning and navigation.

The magnetic sensor 180D includes a Hall sensor. The portable device 100 may detect opening and closing of a flip cover or a leather case by using the magnetic sensor 180D. In some embodiments, when the portable device 100 is a clamshell phone, the portable device 100 may detect opening and closing of a flip cover by using the magnetic sensor 180D. Further, a feature such as automatic unlocking of the flip cover is set based on a detected opening or closing state of the leather case or a detected opening or closing state of the flip cover.

The acceleration sensor 180E can detect a magnitude of accelerations of the portable device 100 in various directions (generally on three axes), can detect a magnitude and a direction of gravity when the portable device 100 is static, and may be further configured to recognize an attitude of the portable device 100, and be applied to switching between a landscape mode and a portrait mode, a pedometer, or another application.

The distance sensor 180F is configured to measure a distance. The portable device 100 may measure the distance in an infrared manner or a laser manner. In some embodiments, in a photographing scenario, the portable device 100 may measure a distance by using the distance sensor 180F to implement quick focusing.

The optical proximity sensor 180G may include, for example, a light-emitting diode (LED) and an optical detector, for example, a photodiode. The light-emitting diode may be an infrared emitting diode. The portable device 100 emits infrared light through the light-emitting diode. The portable device 100 detects infrared reflected light from a nearby object by using the photodiode. When sufficient reflected light is detected, it may be determined that there is an object near the portable device 100. When insufficient reflected light is detected, the portable device 100 may determine that there is no object near the portable device 100. The portable device 100 may detect, by using the optical proximity sensor 180G, that the user holds the portable device 100 close to an ear for a call, to automatically turn off a display for power saving. The optical proximity sensor 180G may also be used in a smart cover mode or a pocket mode to automatically perform screen unlocking or locking.

The ambient light sensor 180L is configured to sense ambient light brightness. The portable device 100 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the portable device 100 is in a pocket, to avoid an accidental touch.

The fingerprint sensor 180H is configured to collect a fingerprint. The portable device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the portable device 100 executes a temperature processing policy based on the temperature detected by the temperature sensor 180J. For example, when the temperature reported by the temperature sensor 180J exceeds a threshold, the portable device 100 lowers performance of a processor nearby the temperature sensor 180J, to reduce power consumption for thermal protection. In some other embodiments, when the temperature is less than another threshold, the portable device 100 heats the battery 142 to prevent the portable device 100 from abnormal shutdown caused by a low temperature. In some other embodiments, when the temperature is lower than still another threshold, the portable device 100 boosts an output voltage of the battery 142 to avoid abnormal shutdown caused by a low temperature.

The touch sensor 180K may also be referred to as a "touch component". The touch sensor 180K may be disposed on the display 194. The touch sensor 180K and the display 194 form a touchscreen that is also referred to as a "touch screen". The touch sensor 180K is configured to detect a touch operation performed on or near the touch sensor. The touch sensor may transfer the detected touch operation to the application processor to determine a type of a touch event. For example, when the touch sensor 180K receives a touch operation, a corresponding hardware interrupt is sent to a kernel layer in the operating system of the portable device 100. The kernel layer processes the touch operation into a touch event (including information such as touch coordinates and a timestamp of the touch operation). The portable device 100 may respond to the touch event and perform a corresponding function. For example, a visual output related to the touch operation may be provided through the display 194. In some other embodiments, the touch sensor 180K may also be disposed on a surface of the portable device 100 at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may alternatively be disposed in a headset, to form a bone conduction headset. The audio module 170 may obtain a speech signal through parsing based on the vibration signal that is of the vibration bone of the vocal-cord part and that is obtained by the bone conduction sensor 180M, to implement a speech function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch-sensitive button. The portable device 100 may receive a key input, and generate a key signal input related to a user setting and function control of the portable device 100.

The motor 191 may generate a vibration prompt. The motor 191 may be configured to provide an incoming call vibration prompt and a touch vibration feedback. For example, touch operations performed on different applications (for example, photographing and audio playback) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. Touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the portable device 100. The portable device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may be compatible with different types of SIM cards. The SIM card interface 195 may also be compatible with an external storage card. The portable device 100 interacts with a network through the SIM card, to implement functions such as conversation and data communication. In some embodiments, the portable device 100 uses an eSIM, namely, an embedded SIM card. The eSIM card may be embedded in the portable device 100, and cannot be separated from the portable device 100.

FIG. 2 shows a structure that may be used by the portable device 100 by using a star structure as an example, but does not constitute a limitation on the structure of the portable device 100. In some embodiments, the structure of the portable device 100 may be a bus type structure. A structure type of the portable device 100 is not limited in this embodiment of this application.

The large-screen device 200 may be an electronic device with a large display, for example, a smart television.

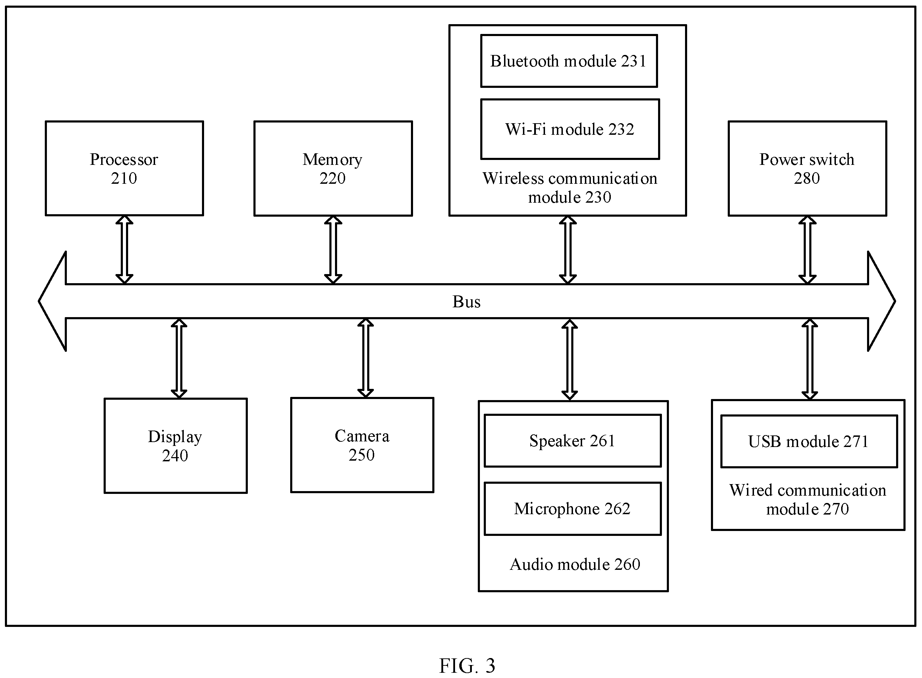

The following describes an example of a structure of the large-screen device 200 with reference to FIG. 3.

As shown in FIG. 3, the large-screen device 200 may include a processor 210, a memory 220, a wireless communication module 230, a display 240, a camera 250, an audio module 260, a wired communication module 270, a power switch 280, and the like.

The processor 210 may be configured to read and execute computer-readable instructions. In specific implementation, the processor 111 may mainly include a controller, an arithmetic unit, and a register. The controller is mainly responsible for decoding instructions and sending a control signal for an operation corresponding to the instructions. The arithmetic unit is mainly responsible for storing a register operand, an intermediate operation result, and the like that are temporarily stored during instruction execution.

The memory 220 is coupled to the processor 210, and is configured to store various software programs and/or a plurality of groups of instructions.

The wireless communication module 230 may include a Bluetooth module 231 and a Wi-Fi module 232. The Bluetooth module 231 and/or the Wi-Fi module 232 may exchange data with the portable device 100, for example, receive image data from the portable device 100. In specific implementation, the Bluetooth module 231 may include a classic Bluetooth (for example, Bluetooth 2.1) module and/or a Bluetooth low energy (Bluetooth low energy, BLE) module. The Wi-Fi module 232 may include one or more of a Wi-Fi direct module, a Wi-Fi LAN module, or a Wi-Fi softAP module. In some embodiments, the Bluetooth module 231 and/or the Wi-Fi module 232 may transmit a signal, for example, broadcast a Bluetooth signal or a beacon signal, so that another device (for example, the portable device 100) may discover the large-screen device 200, and a wireless communication connection may be established between the another device and the large-screen device 200, for data exchange. In some embodiments, the large-screen device 200 may access the Internet through the Wi-Fi module 232, to establish a communication connection to a server (for example, a video playback website server) on the Internet. In some embodiments, the wireless communication module 230 may further include an infrared communication module (not shown). The infrared communication module may communicate with a device such as a remote controller by using an infrared remote control technology.

The camera 250 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV.

The display 240 may be configured to display an image, a video, and the like. The display 240 may be a liquid crystal display (liquid crystal display, LCD), an organic light-emitting diode (organic light-emitting diode, OLED) display, an active-matrix organic light-emitting diode (active-matrix organic light-emitting diode, AMOLED) display, a flexible light-emitting diode (flexible light-emitting diode, FLED) display, a quantum dot light-emitting diode (quantum dot light-emitting diode, QLED) display, or the like. In some embodiments, the display 240 may be a display greater than 40 inches, for example, a 65-inch display.

The audio module 260 may include a speaker 261. The processor 210 may convert a digital audio signal into an analog audio signal. The speaker 261 may convert the analog audio signal into a sound signal. The audio module 260 may further include a microphone 262. The microphone 262 may be configured to convert the sound signal into an electrical signal. When sending a voice control instruction, a user may send a control voice. The sound signal of the control voice may be input to the microphone 262 to be converted into the electrical signal. The processor 210 may parse the electrical signal to obtain the control instruction.

The wired communication module 270 may include a USB module 271, so that the large-screen device 200 may communicate with another device (for example, the portable device 100) through a USB data cable. The wired communication module 270 may further include a high definition multimedia interface (high definition multimedia interface, HDMI) (not shown). The large-screen device 200 may communicate with a device such as a set top box (set top box, STB) through the HDMI.

The power switch 280 may be configured to control a power supply to supply power to the large-screen device 280.

The large-screen device 200 may be connected to the portable device 100 through a network. For example, the network may be a local area network (local area network, LAN), or may be a wide area network (wide area network, WAN) (for example, the Internet). The network between the large-screen device 200 and the portable device 100 may be implemented by using any known network communication protocol. The network communication protocol may be various wired or wireless communication protocols, such as Ethernet, a universal serial bus (universal serial bus, USB), a firewire (firewire), a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), new radio (new radio, NR), Bluetooth (Bluetooth), and wireless fidelity (wireless fidelity, Wi-Fi).

FIG. 3 shows a structure that may be used by the large-screen device 200 by using a bus type structure as an example, but does not constitute a limitation on the structure of the large-screen device 200. In some embodiments, the structure of the large-screen device 200 may be a star structure. A structure type of the large-screen device 200 is not limited in this embodiment of this application.

In some embodiments, the portable device 100 and the large-screen device 200 may use a same type of structure. For example, both may use a bus type structure or a star structure. In some embodiments, the portable device 100 and the large-screen device 200 may use different types of structures. For example, the portable device 100 may use a bus type structure, and the large-screen device 200 may use a star structure. The following describes an example of a software system of the portable device 100.

The software system of the portable device 100 may use a layered architecture, an event-driven architecture, a microkernel architecture, a micro service architecture, or a cloud architecture. In the layered architecture, software is divided into several layers, and each layer has a clear role and task. The layers communicate with each other through a software interface. In some embodiments, an Android system is divided into four layers: an application layer, a java framework (java framework) layer, a native (native) layer, a kernel layer, and a hardware layer from top to bottom.

The following describes an example of a software structure of the portable device 100 by using the Android system with a layered architecture as an example.

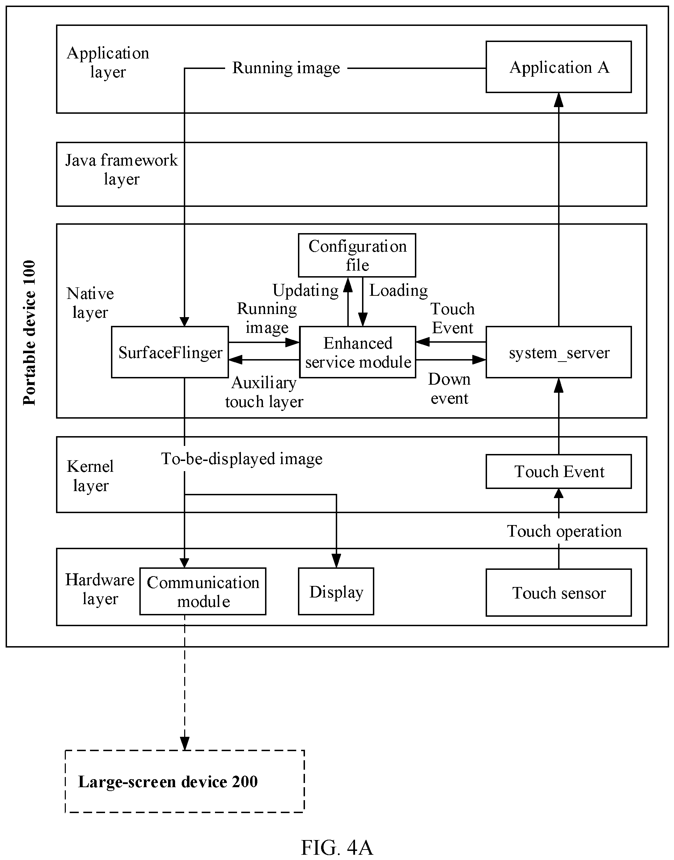

In some embodiments, FIG. 4A is a block diagram of a software structure that may be applied to the portable device 100 according to an embodiment of this application.

An application layer of the portable device 100 may include an application A. When the application A runs, the application A may draw and render an image. For ease of description, the image drawn and rendered by the application A may be referred to as a running image of the application A. In an example, a running image of the application A may be shown in FIG. 5A. The running image may include a plurality of ROIs such as an ROI 501, an ROI 502, an ROI 503, an ROI 504, an ROI 505, an ROI 506, an ROI 507, an ROI 508, an ROI 509, an ROI 510, an ROI 511, and an ROI 512. The application A may transfer the running image to a SurfaceFlinger at the native layer.

An enhanced service module may be set at the native layer. The enhanced service module may obtain the running image from the SurfaceFlinger, determine a current scenario of the application A based on the running image, and obtain, from a preset configuration file (the configuration file is specifically described below), ROI layout information that matches the current scenario. It may be understood that the application A may have a plurality of operation scenarios. Different operation scenarios correspond to different ROI layouts. The operation scenario may be referred to as a scenario for short. For example, the application A is a game application. The game application may have a battle scenario, an equipment purchase scenario, a setting scenario, a match details scenario, a personal details scenario, and the like.

For example, the battle scenario of the game application may further be a 5V5 battle scenario, a 3V3 battle scenario, or the like. It may be understood that ROI layouts on a game screen in the foregoing different scenarios are different. Therefore, the application A may determine the current scenario of the application A based on the recently obtained running image of the application A, to determine the ROI layout information. A specific solution is described below. Details are not described herein again.

When a touch sensor detects a touch operation, a hardware interrupt corresponding to the touch operation is sent to the kernel layer. The kernel layer processes the touch operation into a touch event (including information such as touch coordinates and a timestamp of the touch operation). A system server at the native layer may obtain the touch event. For example, the system server may transfer the touch event to the application A according to a proper procedure, so that original operation logic of the application A is not affected. The system server may transfer a copy of the touch event to the enhanced service module. The enhanced service module may determine, based on the touch event, whether to generate a new down event. If the new down event is generated, the down event may be transferred to the system_server, so that the system_server transfers the down event to the application A.

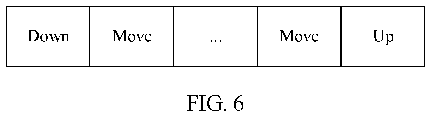

It may be understood that the touch operation is usually a tap operation or a slide operation. The tap operation may include a down (down) operation and an up (up) operation that are performed on a same touch point. Correspondingly, a pressing event corresponding to the tap operation may include a down (down) event and an up (up) event. The slide operation (namely, a slide operation that is started by a user and that is performed on a touchscreen) may include a down operation (performed on a start touch point), a plurality of move (move) operations (performed on a plurality of touch points), and an up operation (performed on an end touch point). Correspondingly, as shown in FIG. 6, a slide event (namely, a slide event generated by the kernel layer) corresponding to the slide operation includes a down event, a plurality of move events, and an up event. According to the foregoing solution, the enhanced service module may obtain the ROI layout information corresponding to the current scenario of the application A and the touch event corresponding to the touch operation started by the user.

For example, the enhanced service module may generate an auxiliary touch layer based on the ROI layout information. The auxiliary touch layer may include one or more auxiliary touch ROIs. The auxiliary touch ROI is generated based on the ROI layout information. The auxiliary touch layer may include an initialization operation area. The initialization operation area is an area that is set in this embodiment of this application and that does not overlap the ROI (this is described below). In an example, the auxiliary touch layer may be shown in FIG. 5B, and may include an initialization operation area, and a plurality of auxiliary touch ROIs such as an auxiliary touch ROI 501', an auxiliary touch ROI 502', an auxiliary touch ROI 503', an auxiliary touch ROI 504', an auxiliary touch ROI 505', an auxiliary touch ROI 506', an auxiliary touch ROI 507', an auxiliary touch ROI 508', an auxiliary touch ROI 509', an auxiliary touch ROI 511', and an auxiliary touch ROI 512'. The auxiliary touch ROIs of the auxiliary touch layer one-to-one correspond to the ROIs of the running image. Specifically, the auxiliary touch ROI 501' corresponds to the auxiliary touch ROI 501. The auxiliary touch ROI 502' corresponds to the auxiliary touch ROI 502. The auxiliary touch ROI 503' corresponds to the auxiliary touch ROI 503. The auxiliary touch ROI 504' corresponds to the auxiliary touch ROI 504. The auxiliary touch ROI 505' corresponds to the auxiliary touch ROI 505. The auxiliary touch ROI 506' corresponds to the auxiliary touch ROI 506. The auxiliary touch ROI 507' corresponds to the auxiliary touch ROI 507. The auxiliary touch ROI 508' corresponds to the auxiliary touch ROI 508. The auxiliary touch ROI 509' corresponds to the auxiliary touch ROI 509. The auxiliary touch ROI 510' corresponds to the auxiliary touch ROI 510. The auxiliary touch ROI 511' corresponds to the auxiliary touch ROI 511. The auxiliary touch ROI 512' corresponds to the auxiliary touch ROI 512.

In FIG. 5B, a dashed line is used for showing the auxiliary touch ROI. This is merely an example for description and does not limit a manner of showing the auxiliary touch ROI. In another example, a highlight line or color may be used for showing the auxiliary touch ROI, or a solid line may be used for showing the auxiliary touch ROI, or a bold line may be used for showing the auxiliary touch ROI. Details are not described herein again. Similarly, a manner of showing the initialization operation area is not limited in this embodiment of this application either.

For example, the enhanced service module may generate the auxiliary touch layer based on the ROI layout information and the touch event. The auxiliary touch layer may include one or more auxiliary touch ROIs and a touch point. The touch point may be generated based on the touch coordinates in the touch event and the timestamp of the touch operation. Specifically, a location of the touch point at the auxiliary touch layer may be obtained based on the touch coordinates, and display time of the touch point may be obtained based on the timestamp of the touch operation. Therefore, the touch point may be displayed at the auxiliary touch layer. In other words, the auxiliary touch layer may include the touch point.

In an example, the auxiliary touch layer may be shown in FIG. 5C, and may include an initialization operation area, a frequent operation area, an auxiliary touch ROI 501', an auxiliary touch ROI 502', an auxiliary touch ROI 503', an auxiliary touch ROI 504', an auxiliary touch ROI 505', an auxiliary touch ROI 506', an auxiliary touch ROI 507', an auxiliary touch ROI 508', an auxiliary touch ROI 509', an auxiliary touch ROI 510', an auxiliary touch ROI 511', and an auxiliary touch ROI 512'. An area of the frequent operation area except an ROI may be referred to as an attract area (this is described below). The auxiliary touch ROI in FIG. 5C may be implemented with reference to the auxiliary touch ROI shown in FIG. 5B. Details are not described herein again. As shown in FIG. 5C, in this example, the auxiliary touch layer may further include a touch point 513 of a slide operation. Occurrence time of a touch operation corresponding to the touch point 513 (or a timestamp of a touch operation in a touch event corresponding to the touch point 513) is closest to synthetic time of the auxiliary touch layer, and is ahead of the synthetic time.

As shown in FIG. 4A, for example, the SurfaceFlinger may synthesize a to-be-displayed image based on the running image and the auxiliary touch layer. For example, the SurfaceFlinger may synthesize the to-be-displayed image based on the running image, the auxiliary touch layer, and another layer. The another layer may be a status bar or the like. In other words, the running image and the auxiliary touch layer participate in synthesis of the to-be-displayed image. In this embodiment of this application, an image or a layer participating in synthesis of the to-be-displayed image may be referred to as an image or a layer included in the to-be-displayed image. In other words, if the running image participates in synthesis of the to-be-displayed image, it may be considered that the to-be-displayed image includes the running image. If the auxiliary touch layer participates in synthesis of the to-be-displayed image, it may be considered that the to-be-displayed image includes the auxiliary touch layer.

For example, as shown in FIG. 5B, the auxiliary touch layer may be a transparent layer or a layer with specific transparency. Dashed lines or solid lines are used for showing the auxiliary touch ROI, the initialization operation area, and the frequent operation area. When the to-be-displayed image is synthesized, the auxiliary touch layer may be overlaid on the running image to obtain the to-be-displayed image. In other words, when the to-be-displayed image is displayed on a display of an electronic device, the auxiliary touch layer is located on a side that is of the to-be-displayed image and that faces toward the user. In an example, a to-be-displayed image shown in FIG. 5D may be obtained by combining the running image shown in FIG. 5A and the auxiliary touch layer shown in FIG. 5B. In an example, a to-be-displayed image shown in FIG. 5E may be obtained by combining the running image shown in FIG. 5A and an auxiliary touch layer shown in FIG. 5C.

As shown in FIG. 4A, for example, the SurfaceFlinger may transfer the to-be-displayed image to a communication module (for example, the wireless image module 160 or the mobile communication module 150) at a hardware layer, to send the to-be-displayed image to the large-screen device 200. For example, the SurfaceFlinger may transfer a copy of the to-be-displayed image to a hardware buffer of the local display of the portable device 100, so that the display performs updating and displays the to-be-displayed image. In other words, the image A2 displayed on the large-screen device 200 and the image A1 displayed on the portable device 100 may be shown in FIG. 5D or FIG. 5E.

For example, as described above, auxiliary touch functional areas at the auxiliary touch layer one-to-one correspond to functional areas in the running image. When the image A1 includes the auxiliary touch layer and the running image (in other words, the auxiliary touch layer and the running image participate in synthesis of the image A1), a functional area of the image A1 is formed by overlapping the auxiliary touch ROI and the ROI in the running image. Therefore, an ROI in the image A1 may be an auxiliary touch ROI, or may be an ROI of the running image. In other words, the auxiliary touch ROI may be referred to as or belong to the ROI of the image A1, and the ROI of the running image may be referred to as or belong to the ROI of the image A1.

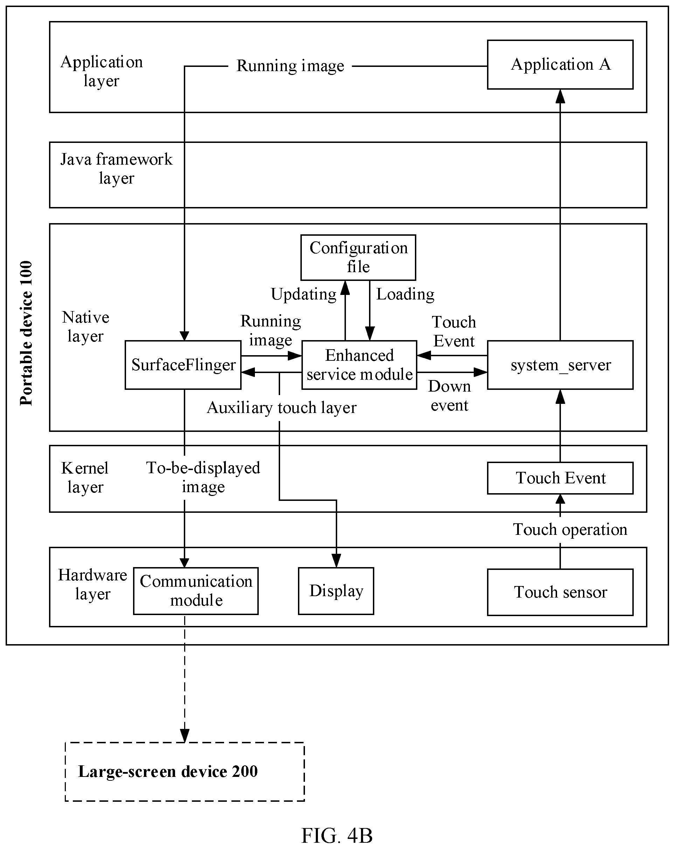

In some embodiments, FIG. 4B is a block diagram of another software structure that may be applied to the portable device 100 according to an embodiment of this application. A difference between the software structure shown in FIG. 4B and the software structure shown in FIG. 4A lies in that, in FIG. 4B, the enhanced service module may transfer the auxiliary touch layer to the hardware buffer of the local display of the portable device 100, so that the portable device 100 displays the auxiliary touch layer. However, in FIG. 4A, the SurfaceFlinger transfers the copy of the to-be-displayed image to the hardware buffer of the local display of the portable device 100, so that the portable device 100 displays the to-be-displayed image. In other words, in the solution shown in FIG. 4B, the image A2 displayed on the large-screen device 200 may be shown in FIG. 5D (or FIG. 5E), and the image A1 displayed on the portable device 100 may be shown in FIG. 5B (or FIG. 5C). In the solution shown in FIG. 4B, the portable device 100 does not need to display an image of the application A, so that power consumption can be reduced. In addition, the portable device displays an image with an ROI of the application A, so that a user learns an operation manner provided in this embodiment of this application. This improves user operation experience.

In some embodiments, the to-be-displayed image is the running image, or the to-be-displayed image is synthesized based on the layers such as the running image and the status bar. In other words, the auxiliary touch layer does not participate in synthesis of the to-be-displayed image, or the to-be-displayed image does not include the auxiliary touch layer. In an example, the to-be-displayed image may be shown in FIG. 5A. Correspondingly, the image A2 is also shown in FIG. 5A. For example, the image A1 of the portable device 100 may be the auxiliary touch layer. In an example, the image A1 may be shown in FIG. 5B.

In some embodiments, the application A may run on the large-screen device 200. When the application A is in a running state, the large-screen device 200 may display the image A2. The large-screen device may project or send the image A1 to the portable device 100, so that the portable device 100 displays the image A1. The portable device 100 may receive a touch event corresponding to a touch operation performed on the image A1, to control the application A on the large-screen device 200.

The following describes an example of a software system of the large-screen device 200.

The software system of the large-screen device 100 may use a layered architecture, an event-driven architecture, a microkernel architecture, a micro service architecture, or a cloud architecture. The following describes an example of the software structure of the large-screen device 200 by using an Android system with a layered architecture as an example.

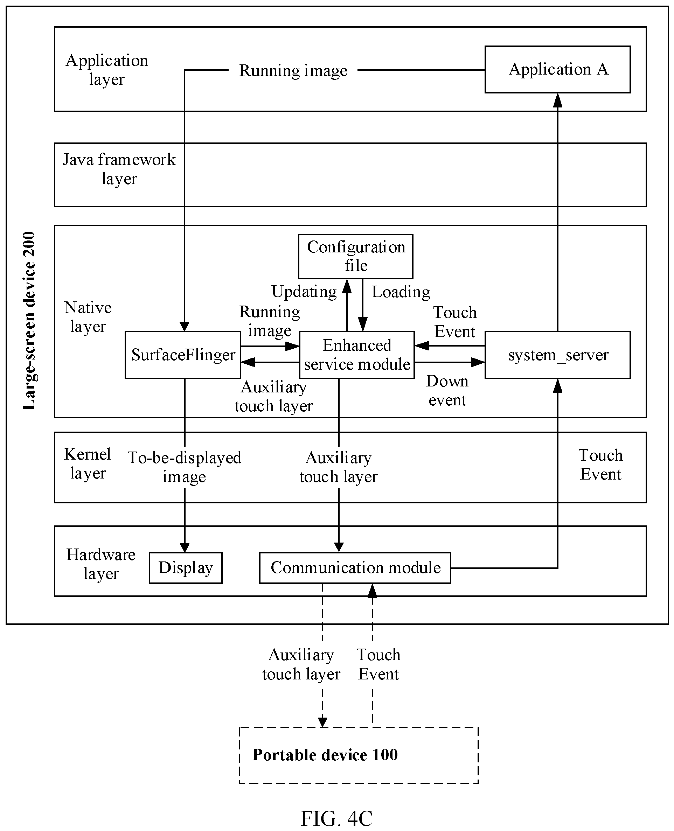

FIG. 4C is a block diagram of the software structure that may be applied to the large-screen device 100 according to an embodiment of this application.

The software structure shown in FIG. 4C may be similar to the software structure shown in FIG. 4A, and functions of corresponding modules are the same or similar. Details are not described herein again. A difference lies in that the enhanced service module may send the auxiliary touch layer to the portable device 100 through the communication module, and the system_server receives touch information from the portable device 100 through the communication module. The portable device 100 displays the image A1 based on the auxiliary touch layer received from the large-screen device 200. For example, the image A1 may be shown in FIG. 5B (or FIG. 5C). The touch information may represent the touch operation performed on the image A1. Specifically, the touch information may be or include the touch event corresponding to the touch operation performed on the image A1. The touch event may be transferred to the application A and the enhanced service module through the system server.

For example, coordinates of the auxiliary touch ROI and coordinates of the initialization operation area at the auxiliary touch layer sent to the portable device 100 may be converted, to adapt to the display of the portable device 100. In an example, when or before sending the auxiliary touch layer to the portable device 100, the large-screen device 200 may convert the coordinates of the auxiliary touch ROI and the coordinates of the initialization operation area at the auxiliary touch layer based on a size of the display of the large-screen device 200 and a size of the display of the portable device 100, to adapt to the display of the portable device 100. When the large-screen device 200 establishes a connection to the portable device 100, the large-screen device 200 may obtain the size of the display of the portable device 100. In an example, when or after receiving the auxiliary touch layer, the portable device 100 may convert the coordinates of the ROI and the initialization operation area at the auxiliary touch layer based on the size of the display of the large-screen device 200 and the size of the display of the portable device 100, to adapt to the display of the portable device 100. When the large-screen device 200 establishes a connection to the portable device 100, the portable device 100 may obtain the size of the display of the large-screen device 200.

For example, touch coordinates included in the touch event sent to the large-screen device 200 may be converted, to adapt to the display of the large-screen device 200. In an example, when or before sending the touch event to the large-screen device 200, the portable device 100 may convert the touch coordinates of the touch event based on the size of the display of the large-screen device 200 and the size of the display of the portable device 100, to adapt to the display of the large-screen device 200. In an example, when or after receiving the touch event, the large-screen device 200 may convert the touch coordinates of the touch event based on the size of the display of the large-screen device 200 and the size of the display of the portable device 100, to adapt to the display of the large-screen device 200.

In some embodiments, in the software system shown in FIG. 4C, the large-screen device 200 may send the to-be-displayed image to the portable device 100, so that the portable device 100 can display the image A1 based on the to-be-displayed image. For example, the image A1 may be shown in FIG. 5D (or FIG. 5E).

In some embodiments, the large-screen device 200 displays the running image of the application A. In other words, the image A2 may be the running image. In an example, the image A2 may be shown in FIG. 5A. For example, the large-screen device 200 may send the auxiliary touch layer to the portable device 100, so that the portable device 100 can display the auxiliary touch layer. In other words, the image A1 may be the auxiliary touch layer. In an example, the image A1 may be shown in FIG. 5B.

The foregoing example describes the software system provided in this embodiment of this application. The following describes an example of a configuration process of a configuration file in the software system shown in FIG. 4A (or FIG. 4B, or FIG. 4C).

The configuration file may be set offline or preset. For example, the configuration file may be a file in an xml format.

A plurality of auxiliary touch applications may be predetermined. The auxiliary touch application is an application that can be controlled by using the human-computer interaction method provided in embodiments of this application. For ease of description, the plurality of auxiliary touch applications are referred to as a plurality of applications for short.

The following describes an example in which the plurality of applications are a plurality of game applications.

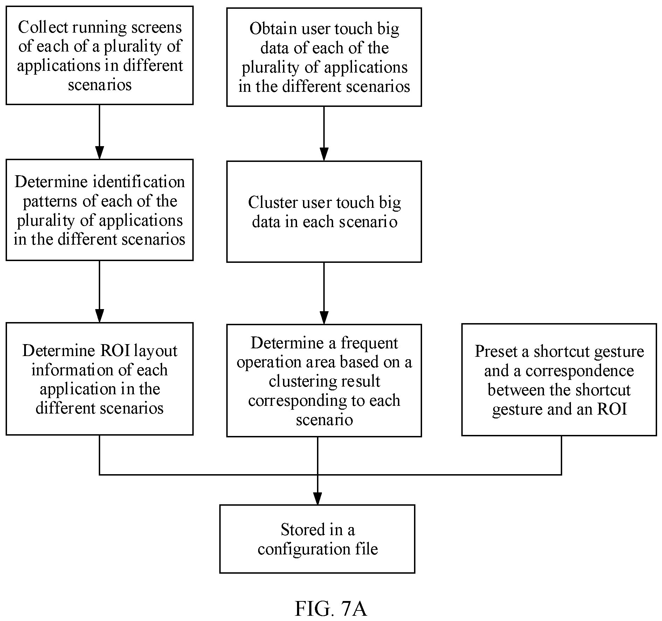

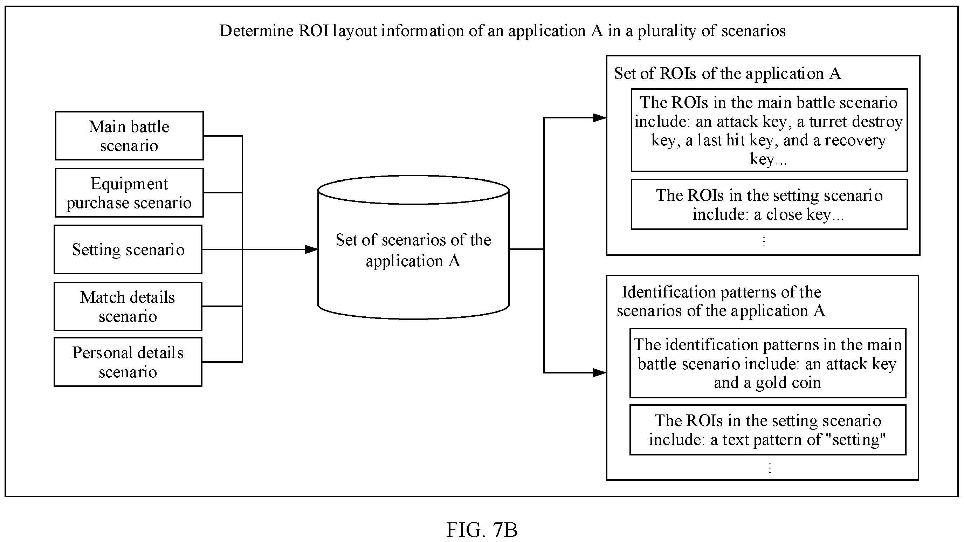

As shown in FIG. 7A, running screens of each of the plurality of game applications in different scenarios may be collected. As shown in FIG. 7B, for example, the application A is an MOBA game application. A scenario of the application A may include a main battle scenario (for example, a 5V5 main battle scenario), an equipment purchase scenario, a setting scenario, a match details scenario, a personal details scenario, and the like.

For example, the collected running screens of the plurality of applications may be recorded in the following manner:

$$GameImageSet = \{GameImages_k \mid GameImages_k \in Game_k\}$$

GameImageSet is a set of collected running screens of a plurality of game applications, and includes running screens $GameImages_k$ of different game applications $Game_k$ in a plurality of scenarios.

Identification patterns of each of the plurality of game applications in the different scenarios may be determined. An identification pattern of any scenario B1 of the application A is a pattern that can distinguish the scenario B 1 from another scenario of the application A. For example, the identification pattern may be manually specified. An application A is used as an example. As shown in FIG. 7B, an identification pattern of the main battle scenario of the application A may include patterns such as an attack key and a gold coin. The identification pattern of the setting scenario of the application A may include a text pattern of "setting".

For example, the collected identification patterns of each of the plurality of applications in the different scenarios may be recorded in the following manner:

$$GamePatterns_k = \{Pattern_i \mid Pattern_i \in Game_k\}$$

$GamePatterns_k$ indicates identification patterns of a game application $Game_k$ in a plurality of scenarios.

ROI layout information of each of the plurality of game applications in the different scenarios may be determined. Based on an identification pattern of the application A in any scenario, an image recognition method (for example, a pattern matching method of OpenCV) may be used for recognizing a running screen including the identification pattern in this scenario, namely, the running screen in this scenario, from the plurality of collected running screens of the application A. Further, the image recognition method may be used for recognizing ROIs in this scenario, to obtain the ROI layout information. The ROI layout information may specifically include location information (a location on a screen) and size information of the ROIs.

For example, the collected ROI layout information of each of the plurality of applications in the different scenarios may be recorded in the following manner:

$$GameROISet = \{GameROIs_k \mid GameROIs_k = LayoutTask(GameImages_k, GamePatterns_k)\}$$

GameROISet is a set of ROIs of a plurality of game applications, and includes the ROIs of the different game applications. $GameROIs_k$ is a set of ROIs of a game application $Game_k$ in a plurality of scenarios, and is generated by using a LayoutTask process. Basic logic for using LayoutTask to generate an ROI set includes: Image recognition is performed based on an identification pattern of the game application $Game_k$ in any scenario, a running screen in this scenario is recognized from the plurality of collected running screens of the application A, and then the image recognition method is used for recognizing an ROI in this scenario from the running screen in this scenario. The ROIs of the game application $Game_k$ in the plurality of scenarios form $GameROIs_k$.

In the foregoing manner, the identification pattern and the ROI layout information of each of the plurality of applications in the different scenarios may be obtained. The identification pattern and the ROI layout information of each application in the different scenarios may be stored in the configuration file.

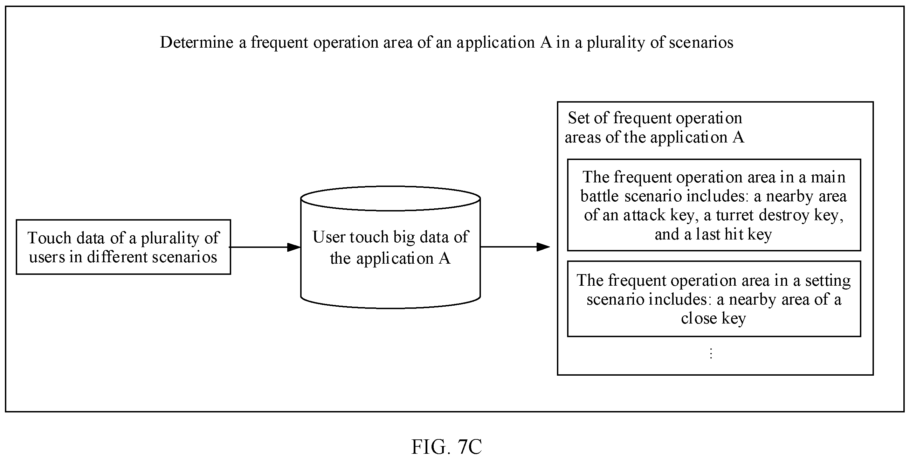

As shown in FIG. 7A and FIG. 7C, user touch big data of each of the plurality of game applications in the different scenarios may be obtained. The user touch big data may also be referred to as historical touch operation data. For example, a user controls the application A through a mobile phone. When the user does not watch the mobile phone, touch data (including location data of touch points and the like) of a plurality of users (for example, more than 200 volunteers) in the scenario B 1 of the application A is collected, to obtain user touch big data of the scenario B 1 of the application A.

User touch big data in each scenario may be clustered. Touch points in the user touch big data are clustered based on location data of touch points in user tapping big data by using a clustering algorithm (for example, K-means), to obtain one or more clusters.

A frequent operation area may be determined based on a clustering result corresponding to each scenario. A clustering result may be the clusters obtained through the foregoing clustering. Each cluster may be referred to as a touch heatmap. A cluster center (clustering center) may be referred to as a touch heatmap center. Any cluster may be framed to obtain a touch hotspot area. The touch hotspot area may be referred to as the frequent operation area. For example, the cluster may be framed in a regular shape (for example, a triangle, a rectangle, or a circle), to obtain the frequent operation area. In the foregoing manner, a frequent operation area of the application A in another scenario may be determined. An area of the frequent operation area except an ROI may be referred to as an attract area.

For example, the frequent operation area may be determined in the following manner:

$$GameTouchSet = \{GameTouches_k| \ GameTouches_k \in Game_k\}$$

$$GameTouches_k = \{point_i(x, y, action, time) \ | \ point_i \in Game_k\}$$

$$AttractAreaSet = \{AttractAreas_k \ | \ AttractAreas_k$$

$$= GenerateTask(GameImages_k, GameTouches_k)\}$$

GameTouchSet is a set of user touch big data of a plurality of game applications, and is formed through statistics of user touch big data $GameTouches_k$ of different game applications $Game_k$. $GameTouches_k$ is a set of user touch big data of the game applications $Game_k$ in different scenarios, and includes touch data point of game players. The touch data point includes user touch coordinates x and y (namely, a location of a touch point). The touch data point may further include a touch action (action). The touch action may be a down (down) operation action, a move (move) operation action, or an up (up) operation action. The touch data point may further include occurrence time (time) of a touch operation. AttractAreaSet is a set of frequent operation areas $AttractAreas_k$ of a plurality of game applications, and is generated by using a GenerateTask process. The GenerateTask process specifically includes: User touch big data of any application is clustered by using a clustering algorithm, and then a cluster obtained through clustering may be framed by using a manual framing method, to obtain the frequent operation area. For details, refer to the foregoing descriptions.

For example, as shown in FIG. 7C, the application A is used as an example. According to the foregoing solution, a partial (entire) area and a nearby area of an attack key, a turret destroy key, and a last hit key of the application A in the main battle scenario may be determined as a frequent operation area. An area of the frequent operation area except an ROI is used as an attract area.

For example, a partial (entire) area and a nearby area of a close key of the application A in the setting scenario may be determined as a frequent operation area. An area of the frequent operation area except an area of the close key is used as an attract area.

In the foregoing manner, frequent operation areas of each of the plurality of game applications in the different scenarios may be obtained. The frequent operation areas of each application in the different scenarios may be stored in the configuration file.

For example, as shown in FIG. 7A, a shortcut gesture may be preset, and a correspondence between the shortcut gesture and an ROI may be established. In an example, a correspondence between a shortcut gesture and a long-distance small-sized ROI may be preset. In other words, the preset shortcut gesture corresponds to the long-distance small-sized ROI. For descriptions of the long-distance small size, refer to the foregoing descriptions. For example, it may be set that a shortcut gesture "^" corresponds to the ROI 511 shown in FIG. 5A, and "v" corresponds to the ROI 512 shown in FIG. 5A.

For example, a recognition threshold of the shortcut gesture may be further set. Specifically, a predefined shortcut gesture may be used as a standard gesture. An actual operation gesture of a user is usually not completely the same as the standard gesture. If a difference between the actual operation gesture of the user and the standard gesture is less than the recognition threshold, it may be determined that the actual operation gesture of the user is the shortcut gesture. A recognition threshold for the shortcut gesture "^" is used as an example. The recognition threshold may include an angle threshold. It may be determined whether an included angle exists in the actual operation gesture of the user, and whether an included angle difference between the included angle and an included angle of the shortcut gesture "^" is less than the angle threshold. If the included angle difference is less than the angle threshold, it may be determined that the actual operation gesture of the user is the shortcut gesture "^".

For example, an algorithm of determining a target ROI for a slide operation may be further set. The algorithm of determining the target ROI for the slide operation may include one or more preset thresholds, for example, a dwell time threshold of the slide operation in the ROI and a sliding speed threshold of the slide operation in the ROI, to determine the target ROI for the slide operation of the user. In an example, ROIs of different sizes may correspond to different thresholds. For example, a dwell time threshold corresponding to an ROI of a larger size is greater than a dwell time threshold corresponding to an ROI of a smaller size. In an example, ROIs of different sizes may correspond to a same threshold. For example, the ROIs of different sizes correspond to a same sliding speed threshold. A preset threshold included in the algorithm of determining the target ROI for the slide operation may be determined based on experience or experiments. Details are not described herein again.

For example, as described above, because the attract area does not overlap the ROI, a touch operation performed on the attract area is not performed on the ROI. To determine a target ROI for the touch operation performed on the attract area, an attract force algorithm may be set. The attract force algorithm is an algorithm of determining the target ROI for the touch operation performed on the attract area. In an example, a correlation $Force_{ROI}$ between a touch point and any ROI may be calculated according to an equation (1).

$$Force_{ROI} = \frac{AREA_{ROI} * \rho_{ROI}}{Dist(point, center_{ROI})^2} \qquad (1)$$

Herein, $AREA_{ROI}$ is a size of the ROI. $\rho_{ROI}$ is a correlation weight of the ROI. The correlation weight may be a preset value. Specifically, the correlation weight of the ROI is related to an operation frequency of the ROI. A higher frequency of operating the ROI by the user indicates a larger correlation weight of the ROI. In specific implementation, the correlation weight of the ROI may be preset based on experience or experiments. $Dist(point, center_{ROI})^2$ indicates a square of a distance between the touch point and a center point of the ROI.

For ease of description, the preset shortcut gesture, the preset correspondence between the shortcut gesture and the ROI, the recognition threshold of the shortcut gesture, the dwell time threshold or the sliding speed threshold of the slide operation in the ROI, an attract force parameter, and the like described above may be used as set elements to form a preset rule set. The algorithm of determining the target ROI for the slide operation and the attract force algorithm may be collectively referred to as an auxiliary touch algorithm. The preset rule set and the auxiliary touch algorithm may be collectively referred to as a preset condition or an auxiliary touch policy.

One or more items in the preset rule set may be preset by a developer, or may be customized by a user. For example, a user-defined screen of a shortcut gesture may be provided for the user in a setting menu of an electronic device. On the user-defined screen, a gesture operation started by the user may be collected and set as a user-defined shortcut gesture, and a correspondence between the user-defined shortcut gesture and an ROI selected by the user may be established based on a selection or determination operation of the user.

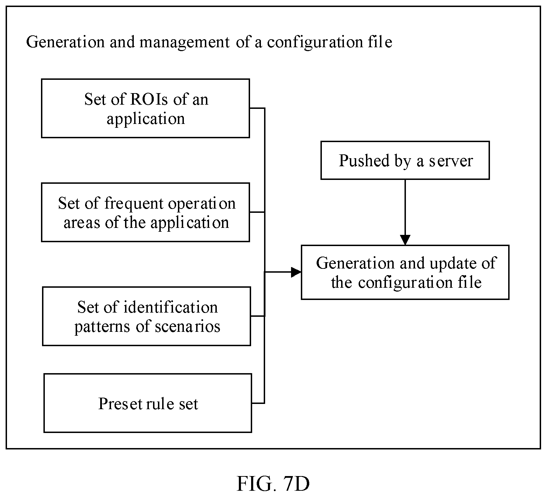

As shown in FIG. 7D, a set of ROIs of applications (including ROIs of each of a plurality of applications in different scenarios), a set of frequent operation areas of the applications (including frequent operation areas of each of the plurality of applications in the different scenarios), a set of identification patterns of scenarios (including identification patterns of each of the plurality of applications in the different scenarios), a preset rule set, and the like may be used for generating a configuration file or be stored in the configuration file. For example, the configuration file may be a file in an xml format. For ease of description, the set of ROIs of applications, the set of frequent operation areas of the applications, the set of identification patterns of scenarios, the preset rule set, and elements in the foregoing sets may be referred to as parameters of the configuration file.

For example, the configuration file may be configured in the portable device 100 or the large-screen device 200 in a server push manner or a factory configuration manner.

For example, the profile may be updated in a server push manner.

For example, the configuration file may be updated in a user-defined manner, for example, the user-defined shortcut gesture and the correspondence between the shortcut gesture and the ROI described above. For example, the configuration file is in an xml format, and user-defined updating may be implemented by modifying an xml.

The following describes an example of a function of the enhanced service module and an implementation method of the function.

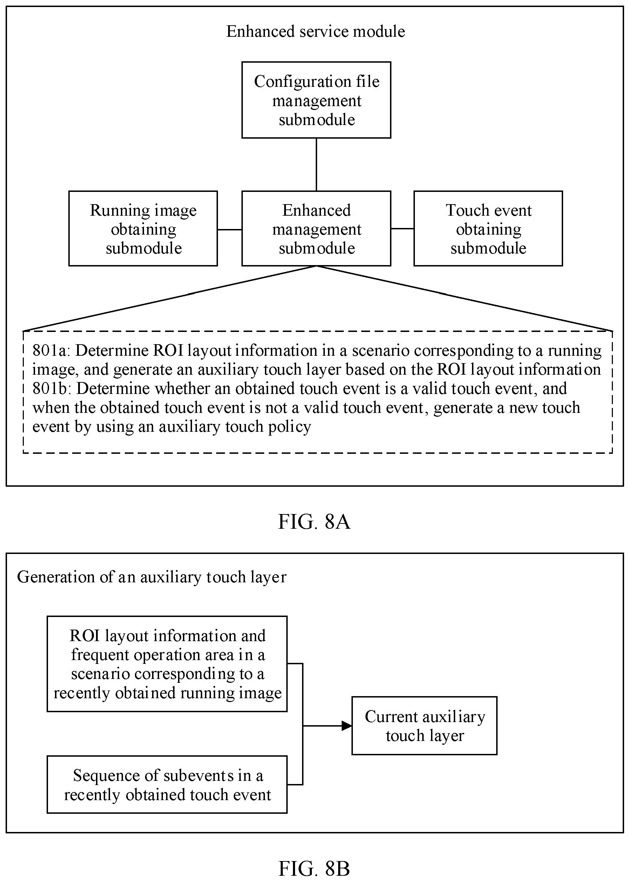

In summary, the function of the enhanced service module includes: obtaining, in real time, a running image of an application and a touch event corresponding to a touch operation of a user, and determining whether to perform an auxiliary touch operation on the application. In this embodiment of this application, the auxiliary touch operation means that a touch operation not directly performed on an ROI is determined or recognized based on the foregoing preset condition or the auxiliary touch policy, and converted into an operation directly performed on the ROI, to trigger a corresponding function of the ROI. As shown in FIG. 8A, the enhanced service module may include a configuration file management submodule, a running image obtaining submodule, an enhanced management submodule, and a touch event obtaining submodule.

When the enhanced service module is started, the configuration file management submodule may load each parameter in the configuration file, to implement an enhanced operation on the application. For example, when a parameter (for example, a shortcut gesture) in the configuration file is defined by a user or an operating system of an electronic device is pushed by the server to generate a configuration update event, the configuration file management submodule may update the configuration file. For example, if the configuration file is a file in an xml format, the configuration file management submodule may use tinyxml to perform a read/write operation on the configuration file.

The running image obtaining submodule may obtain an image (namely, a running image) drawn and rendered by the application A, for example, may obtain a copy of the running image from the SurfaceFlinger. The running image may also be referred to as an original layer. For example, after obtaining the running image, the running image obtaining submodule may store the running image as an image in an RGBA format, and transfer the image to the enhanced management submodule.

The touch event obtaining submodule may obtain a touch event corresponding to the touch operation started by the user. For example, when the system server obtains the touch event from the kernel layer, and transfers the touch event to the application, a copy of the touch event may be obtained from the system server.

The enhanced management submodule may manage and schedule other submodules and perform data processing, and is a control center of the enhanced service module. Specifically, the enhanced management submodule may perform the following steps.

Step 801a: Determine ROI layout information in a scenario corresponding to the running image, and generate an auxiliary touch layer based on the ROI layout information.

Specifically, the management enhanced submodule may determine, from the configuration file based on the running image obtained by the running image obtaining submodule, an identification pattern that matches the running image, to determine a scenario corresponding to the identification pattern as the scenario corresponding to the running image, and therefore determine the ROI layout information in the scenario corresponding to the running image. For example, the running image is set as the running image of the application A. The determining, from the configuration file, an identification pattern that matches the running image may specifically include: determining, by using an image recognition method (for example, a pattern matching method of OpenCV), whether the running image includes an identification pattern of a scenario of the application A. If the running image includes the identification pattern of the scenario, it is determined that the scenario is the scenario corresponding to the running image. If the running image does not include the identification pattern of the scenario, the image recognition method is then used for determining whether the running image includes an identification pattern of another scenario of the application A. The foregoing steps are repeated until the scenario corresponding to the running image is determined.

As described above, the ROI layout information includes location information and size information of an ROI. The auxiliary touch layer may be determined based on the location information and the size information of the ROI.

For example, an initialization operation area and a shortcut gesture operation area may be set based on the location information and the size information of the ROI, and considering operation convenience and comfort of the user. To facilitate a user operation, the initialization operation area and the shortcut gesture operation area do not overlap the ROI. In an example, as shown in FIG. 5B, the initialization operation area may be disposed on an edge of a side of the auxiliary touch layer, to facilitate a user operation in the initialization operation area. In an example, the initialization operation area and the shortcut gesture operation area are a same area. For example, the initialization operation area shown in FIG. 5B is also the shortcut gesture operation area. In an example, the initialization operation area and the shortcut gesture operation area may be different areas, or the initialization operation area may partially overlap the shortcut gesture operation area.

The foregoing merely describes an example of a location of the initialization operation area (or the shortcut gesture operation area), and does not constitute a limitation. Under the condition of not overlapping the ROI, the location of the initialization operation area (or the shortcut gesture operation area) may be set. Under the condition of not overlapping the ROI, the location of the initialization operation area (or the shortcut gesture operation area) may also be set to facilitate the user operation.

The following describes functions of the initialization operation area and the shortcut gesture operation area with reference to an implementation process of the human-computer interaction method. Details are not described herein again.

For example, the determined auxiliary touch layer may include the initialization operation area, the shortcut gesture operation area, and the auxiliary touch ROI described above. For the auxiliary touch ROI, refer to the foregoing descriptions of embodiments shown in FIG. 4A. Details are not described herein again. In an example, the generated auxiliary touch layer may be shown in FIG. 5B.

For example, the scenario corresponding to the running image has a frequent operation area. In step 801a, the generating an auxiliary touch layer based on the ROI layout information specifically further includes: generating the auxiliary touch layer based on the ROI layout information and the frequent operation area. In an example, the frequent operation area at the generated auxiliary touch layer may be shown in FIG. 5B.

For example, when or after the touch event obtaining submodule obtains a touch event, in step 801a, the touch event may be further considered when the auxiliary touch layer is generated based on the ROI layout information. Specifically, the auxiliary touch layer may be generated based on the ROI location information and the ROI size information in the ROI layout information, and based on touch coordinates and a timestamp of a touch operation in the touch event.

As described above, the touch operation of the user is usually a tap operation or a slide operation. A touch event corresponding to the tap operation includes a down event and an up event. The down event and the up event may be referred to as subevents of the touch event corresponding to the tap operation. The down event and the up event may be arranged in a sequence of occurrence time (occurrence time of a down operation and an up operation) of the events, to obtain a subevent sequence of the touch event corresponding to the tap operation. As shown in FIG. 6, the slide operation includes a down operation, a plurality of move operations, and an up operation. Correspondingly, a touch event corresponding to the slide operation includes a down event, a plurality of move events, and an up event. These events may be collectively referred to as subevents of the touch event corresponding to the slide operation. The subevents of the touch event corresponding to the slide operation are arranged in a sequence of occurrence time (occurrence time of corresponding operations) of the events, to obtain a subevent sequence of the touch event corresponding to the slide operation.

As shown in FIG. 8B, a current auxiliary touch layer may be generated based on ROI layout information and a frequent operation area of a recently obtained running image, and a subevent sequence of a recently obtained touch event. The subevent sequence of the touch event is used for generating a touch point at the current auxiliary touch layer. For example, the touch point may be a touch point corresponding to a last subevent (occurrence time of an operation corresponding to the subevent is later than occurrence time of an operation corresponding to another subevent in the subevent sequence) in the subevent sequence.

For example, when the touch operation is a slide operation, the auxiliary touch layer may include a touch point of the slide operation. For details, refer to the foregoing descriptions of FIG. 5C.

For example, when the touch operation is a tap operation, the auxiliary touch layer may include a touch point corresponding to the tap operation. It may be set that the tap operation is performed on an attract area in the frequent operation area. The auxiliary touch layer may be shown in FIG. 5F, and includes a touch point 514. The attract area is an area of the frequent operation area except an ROI.

For example, the enhanced management submodule may generate the auxiliary touch layer and associate the auxiliary touch layer with a pattern display framework (AnativeWindows) by using a SurfaceComposerClient. When the SurfaceFlinger collects layers to synthesize a to-be-displayed image (a to-be-displayed screen), the auxiliary touch layer generated by the enhanced management submodule is added. Specifically, the auxiliary touch layer may cover the running image to obtain the to-be-displayed image.

When or after the touch event obtaining submodule obtains the touch event, the enhanced management submodule may further perform step 801b to determine whether the obtained touch event is a valid touch event. When the obtained touch event is not a valid touch event, namely when the touch operation corresponding to the touch event is a touch operation not directly performed on an ROI, a new touch event (for example, a down event) may be generated by using the auxiliary touch policy.

As described above, the touch operation of the user is usually a tap operation or a slide operation. When a down operation of the tap operation or the slide operation is performed on the ROI, namely when a start touch point of the touch operation is located in the ROI (in other words, a touch point corresponding to the down event is located in the ROI), the touch event corresponding to the touch operation may be referred to as a valid touch event. Correspondingly, when the down operation of the tap operation or the slide operation is performed on an area outside the ROI, namely when the touch operation is an operation not directly performed on the ROI, the touch event corresponding to the touch operation may be referred to as an invalid touch event.

For example, when or after the touch event obtaining submodule obtains the touch event (for example, obtains the touch event from the system server), the enhanced management submodule may determine the start touch point and a functioning location of the start touch point based on the touch coordinates and the timestamp of the touch operation in the touch event, and therefore determine whether the touch event is a valid touch event.

If the touch event is a valid touch event, the enhanced management submodule may not perform a subsequent determining processing process.

It should be noted that, in this embodiment of this application, the touch event obtaining submodule obtains only a copy of the touch event, but does not intercept the touch event. The touch event may still be transferred to the application according to a conventional procedure. The application may properly respond to the valid touch event. Therefore, the enhanced management submodule does not need to perform further processing.

For example, if the touch event is an invalid touch event, in a conventional case, the touch event does not trigger a response of the application A. The enhanced management submodule may generate a new down event by using the auxiliary touch policy. The following three cases may be specifically included.

Case Q1: A target ROI of a slide operation starting from the initialization operation area is determined, and a touch event (for example, a down event) for the target ROI is generated, to trigger the application A to execute a function of the target ROI.

Case Q2: A target ROI of a touch operation performed on the shortcut gesture operation area is determined, and a touch event (for example, a down event) for the target ROI is generated, to trigger the application A to execute a function of the target ROI.

Case Q3: A target ROI of a touch operation performed on the attract area in the frequent operation area is determined, and a touch event (for example, a down event) for the target ROI is generated, to trigger the application A to execute a function of the target ROI.

The following separately describes the three cases in an example in which the application A runs on the portable device 100 and the image A1 is the to-be-displayed image described above.

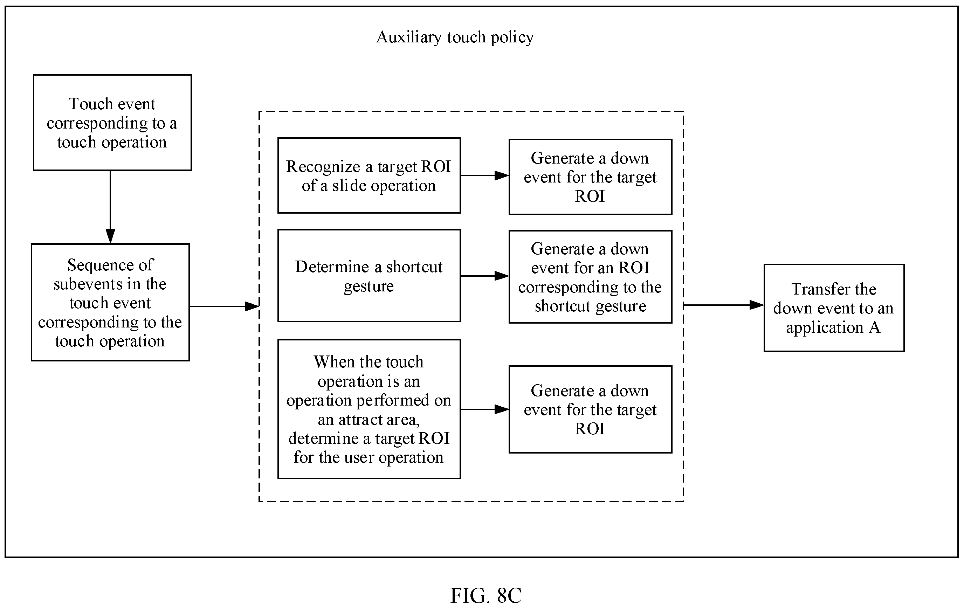

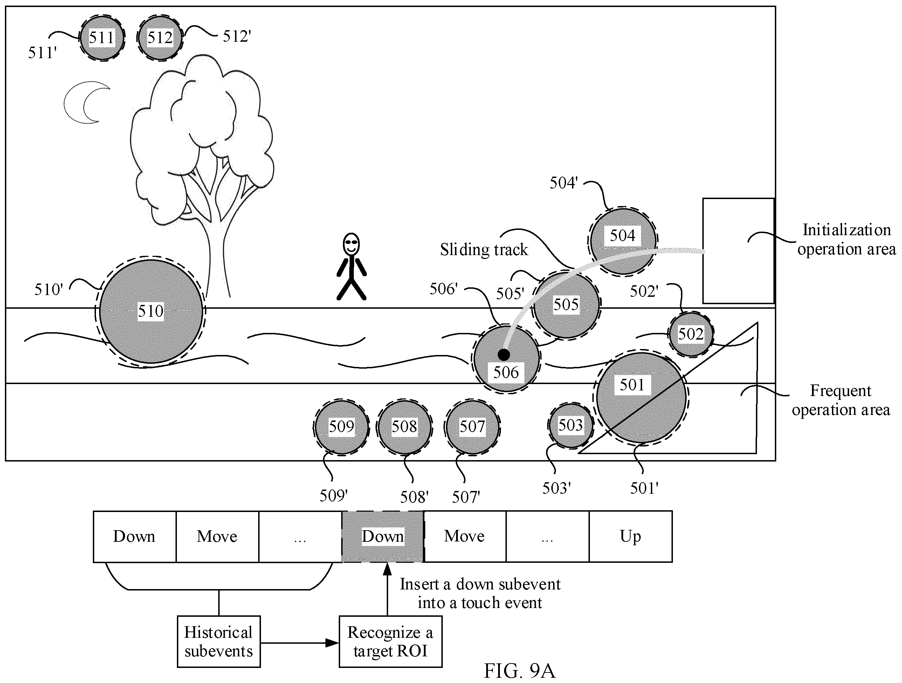

For the case Q1, refer to FIG. 8C and FIG. 9A. The enhanced management submodule may determine, based on the subevent sequence in the touch event, whether the touch operation corresponding to the touch event is a slide operation whose start touch point is located in the initialization operation area, and auxiliary touch ROIs passed through by or reached by the slide operation. Specifically, if the touch point (namely, the start touch point of the slide operation) of the down event of the touch event is located in the initialization operation area, it may be determined that the touch operation corresponding to the touch event is a slide operation whose start touch point is located in the initialization operation area. The auxiliary touch ROIs passed through by or reached by the slide operation may be determined based on touch coordinates corresponding to a plurality of move events. Based on the touch coordinates corresponding to the plurality of move events and the occurrence timestamp of the operation, by using a target ROI recognition algorithm, the target ROI is recognized from the auxiliary touch ROIs passed through by or reached by the slide operation.

It should be noted that because the auxiliary touch ROIs and the ROIs of the running image overlap, the "auxiliary touch ROI" in the case Q1 may alternatively be replaced with the "ROI".

For example, a target recognition algorithm includes a dwell time threshold of a slide operation in an ROI. Dwell time of the slide operation corresponding to the touch event in the auxiliary touch ROI may be determined based on the occurrence timestamp of the touch operation that corresponds to the touch point and that is performed on the auxiliary touch ROI. The dwell time may be a time difference between time when the slide operation enters the auxiliary touch ROI and time when the slide operation leaves the auxiliary touch ROI. If the dwell time of the slide operation in the auxiliary touch ROI is greater than the dwell time threshold, the auxiliary touch ROI is determined as the target ROI.

For example, the target recognition algorithm includes a sliding speed threshold of a slide operation in an ROI. A sliding speed of the slide operation corresponding to the touch event in the auxiliary touch ROI may be determined based on the occurrence timestamp and the touch coordinates of the move event whose touch point is located in the auxiliary touch ROI. If the sliding speed of the slide operation in the auxiliary touch ROI is less than the sliding speed threshold, the auxiliary touch ROI is determined as the target ROI.

The dwell time and the sliding speed may be collectively referred to as sliding parameters.

When the target ROI is determined, a new down subevent for the target ROI may be inserted into the touch event. It may be understood that the target ROI is recognized in real time. Therefore, once the target ROI is recognized, the down subevent for the target ROI may be inserted into the touch event. For example, insertion time of the down subevent may be recognition time of the target ROI. For example, the insertion time of the down subevent may alternatively be time after the recognition time of the target ROI. A time difference between the two times is small, and is usually a time difference caused by system reaction, collaboration between modules, and the like.

The inserted down subevent may be transferred to the system server, and the system_server transfers the down subevent to the application A, to trigger a response of the application A and implement quick auxiliary control of the application A.

For example, a subevent that is in the touch event and whose operation occurrence timestamp is ahead of the recognition time of the target ROI may be referred to as a historical subevent. The inserted down subevent may be referred to as a down event triggered through sliding, or may be referred to as an auxiliary touch down event.

For example, the application A may be set as a game application, and the down event triggered through sliding may be obtained in the following manner:

$$\text{SlideInject}_k = \text{TargetRecog}_k(\text{GameConf}_k,\ \text{HistoryTouches}_k,\ \text{CurScene}_k)$$

$\text{SlideInject}_k$ is a down subevent triggered through sliding, and is generated by using a $\text{TargetRecog}_k$ process. $\text{GameConf}_k$ is a configuration file, $\text{HistoryTouches}_k$ is a historical subevent in the touch event, and $\text{CurScene}_k$ is a recognized game scenario. Main logic of $\text{TargetRecog}_k$ includes: An ROI (namely, a target ROI) that the user wants to trigger is recognized based on a historical subevent in a touch event of a slide operation of the user and an ROI location in a game scenario $\text{CurScene}_k$, and a new down subevent, namely, a down event triggered through sliding, is generated. The target ROI may be recognized based on the dwell time threshold of the slide operation in the ROI and/or the sliding speed threshold of the slide operation in the ROI. For details, refer to the foregoing descriptions. Details are not described herein again.

For example, the image A1 includes an auxiliary touch layer. The auxiliary touch layer includes a touch point of a slide operation. It may be understood that, due to persistence of vision effect of human eyes, from the perspective of human eyes, a touch point at a current auxiliary touch layer and a touch point at an auxiliary touch layer displayed before the current auxiliary touch layer may be connected to form a sliding track. For example, the user may see a sliding track shown in FIG. 9A, so that the user can locate a finger of the user.

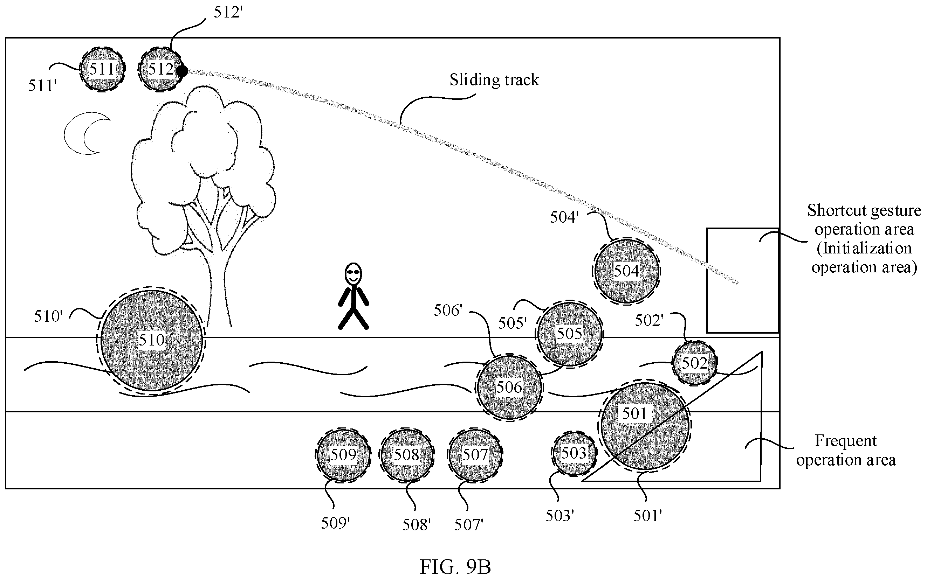

For the case Q2, refer to FIG. 9B. The ROI 511 and the ROI 512 are long-distance small-sized ROIs. According to the Fitts' law, it is difficult for the user to accurately tap the ROI 511 or the ROI 512 without the aid of eyes. In addition, as shown in FIG. 9, even if the user triggers the ROI 512 (or the ROI 511) through a slide operation, the user needs to slide from the initialization operation area to the ROI 512 (or the ROI 511). A longer sliding distance indicates a slow process of triggering the ROI 512 (or the ROI 511).

It should be noted that because the auxiliary touch ROIs and the ROIs of the running image overlap, the "auxiliary touch ROI" in the case Q2 may alternatively be replaced with the "ROI". Specifically, the "ROI 511" may be replaced with the "ROI 511‴", and the "ROI 512" may be replaced with the "ROI 512‴".

For example, the application A may be set as a game application, and the down event triggered through sliding may be determined in the following manner.

As shown in FIG. 8C and FIG. 9C, the ROI 512 (or the ROI 511) may be triggered through a shortcut gesture. It may be set that the "v"-shaped shortcut gesture corresponds to the ROI 512 (or the ROI 511). The enhanced management submodule may determine, based on the subevent sequence in the touch event, whether the touch operation corresponding to the touch event is performed on the shortcut gesture operation area, and determine that the sliding track of the touch operation conforms to the preset "v"-shaped gesture. For example, whether a difference between included angles is less than an angle threshold may be determined. If the difference is less than the angle threshold, it may be determined that the sliding track of the touch operation conforms to the "v"-shaped gesture. In specific implementation, a dollar1 algorithm may be used for gesture recognition. If the sliding track of the touch operation conforms to the "v"-shaped gesture, a down event for the ROI 512 (or the ROI 511) may be generated. The down event may be transferred to the system server, and the system server transfers the down event to the application A, to trigger a response of the application A. The down event may be referred to as a down event triggered through the shortcut gesture, or may be referred to as an auxiliary touch down event.

For example, the application A may be set as a game application, and the down event triggered through the shortcut gesture may be obtained in the following manner:

$$\text{GestureInject}_k = \text{Gesture2Click}_k(\text{GameConf}_k, \text{HistoryTouches}_k, \text{GestureLib}, \text{CurScene}_k)$$

Herein, $\text{GestureInject}_k$ is the down event triggered through the shortcut gesture, and is generated by using a function $\text{Gesture2Click}_k$. $\text{GameConf}_k$ is the configuration file. $\text{HistoryTouches}_k$ is a historical subevent in the touch event. GestureLib includes a preset shortcut gesture and a preset correspondence between the shortcut gesture and an ROI. $\text{CurScene}_k$ is a recognized game scenario. Main logic of the function $\text{Gesture2Click}_k$ includes: obtaining a subevent of the slide operation of the user, recognizing a shortcut gesture for the slide operation and a correspondence between the shortcut gesture and the ROI based on a shortcut gesture algorithm preset in the configuration file, and generating a new down event. The shortcut gesture algorithm may include the foregoing recognition threshold of the shortcut gesture.

For the case Q3, refer to FIG. 8C and FIG. 5G. The enhanced management submodule may determine, based on the subevent sequence in the touch event, whether the touch operation corresponding to the touch event is performed on the attract area. The attract area is an area of the frequent operation area except an ROI shown in FIG. 5G. The touch operation may be a tap operation. If the tap operation is performed on the attract area, the target ROI of the tap operation may be determined by using the attract force algorithm. The attract force algorithm may be the foregoing equation (1). When or after the target ROI is determined, a down event for the target ROI may be generated. The down event may be transferred to the system_server, and the system_server transfers the down event to the application A, to trigger a response of the application A. The down event may be referred to as a down event triggered through the touch operation performed on the attract area, or may be referred to as an auxiliary touch down event.

It should be noted that because the auxiliary touch ROIs and the ROIs of the running image overlap, the "auxiliary touch ROI" in the case Q3 may alternatively be replaced with the "ROI".

For example, the application A may be set as a game application, and the down event triggered through the touch operation performed on the attract area may be obtained in the following manner:

$$\text{EnlargeInject}_k = \text{AttractForcek}_k(\text{GameConf}_k, \text{HistoryTouches}_k, \text{CurScene}_k)$$

$\text{EnlargeInject}_k$ is the down event triggered through the touch operation performed on the attract area, and is generated by using a function $\text{AttractForce}_k$. Main logic of the function $\text{AttractForce}_k$ includes: obtaining a touch event of a touch operation that is started by the user and that is performed on the attract area, recognizing a target ROI of the touch operation by using the attract force algorithm, and generating a down event for the target ROI. The attract force algorithm may be the foregoing equation (1).

For example, the down event transferred by the enhanced service module to the system server is a union set of $\text{SlideInject}_k$, $\text{GestureInject}_k$, and $\text{EnlargeInject}_k$, and may be represented in the following manner:

$$\text{InjectSeq}_k = (\text{SlideInject}_k \cup \text{GestureInject}_k \cup \text{EnlargeInject}_k)$$

Herein, InjectSeq$_k$ is the auxiliary touch down event transferred by the enhanced service module to the system_server.

When or after receiving the auxiliary touch down event in the case Q1, the case Q2, or the case Q3, the application A may perform, in response to the auxiliary touch down event, a function of the target ROI corresponding to the auxiliary touch down event, and draw and render a corresponding running image. For example, the target ROI corresponding to the auxiliary touch down event is a "setting" ROI. The application A may draw and render a running image in response to the auxiliary touch down event when the "setting" ROI is touched. The running image may be used for synthesizing a to-be-displayed image. In other words, the synthesized to-be-displayed image includes the running image. The synthesized to-be-displayed image may be sent to the large-screen device 200, so that the large-screen device 200 updates the image A2. For details of synthesizing and sending the to-be-displayed image, refer to the foregoing descriptions of FIG. 4A. Details are not described herein again.

When the application A runs on the large-screen device 200, the large-screen device 200 may obtain a touch event from the portable device 100, so that the enhanced management submodule of the large-screen device 200 may perform step 801a and step 801b in FIG. 8. For details, refer to the foregoing descriptions. Details are not described herein again.

It may be understood that the auxiliary touch down event may trigger the application A to execute a function of the target ROI corresponding to the auxiliary touch down event. Therefore, generating the auxiliary touch down event is equivalent to that the portable device 100 receives a touch operation (for example, a tap operation) corresponding to the target ROI. Therefore, a touch operation not directly performed on an ROI may be converted into a touch operation directly performed on the target ROI, to trigger a corresponding function of the target ROI, so that the user can quickly and accurately operate the application without the aid of eyes (namely, through a blind operation). Specifically:

According to the solution in this embodiment of this application, the user may touch the "initialization operation area" that can be accurately positioned, and locate a finger of the user based on visual feedback of a slide operation (due to persistence of vision effect of human eyes, the user may see a sliding track, for example, as shown in FIG. 9A). Therefore, the finger may be moved to the target ROI, to trigger a function of the target ROI and implement auxiliary touch control. In practice, accuracy of the blind operation in a game may be improved by more than 10%, to reach a playable degree.

In the solution of this embodiment of this application, the shortcut gesture operation area may be drawn in a comfort area that facilitates a user operation, and a simple shortcut gesture performed on the shortcut gesture operation area may be mapped to a tap operation for a long-distance small-sized ROI, to reduce finger sliding time and a finger sliding distance, improve accuracy of touch control on the long-distance small-sized ROI, and shorten time for triggering the long-distance small-sized ROI. In practice, accuracy of the blind operation on the long-distance small-sized ROI in the game may be improved by 20%, to greatly improve game experience of the user.

According to the solution in this embodiment of this application, a tapping habit of the user is learned, and the frequent operation ROI is enlarged to obtain the attract area. A tap operation performed on the attract area may be mapped to an operation for the frequent operation ROI, to implement accurate touch control on the game based on an original operation habit without the aid of eyes. In practice, accuracy of touch control on the frequent operation ROI may be improved by more than 10%.

With reference to the foregoing embodiments and related accompanying drawings, an embodiment of this application provides a human-computer interaction method. The method may be performed by a portable device. The portable device is communicatively connected to a large-screen device. The portable device runs an application, and displays a first image of the application. The large-screen device displays a second image of the application. Both the first image and the second image have functional areas. The functional areas in the first image one-to-one correspond to the functional areas in the second image.

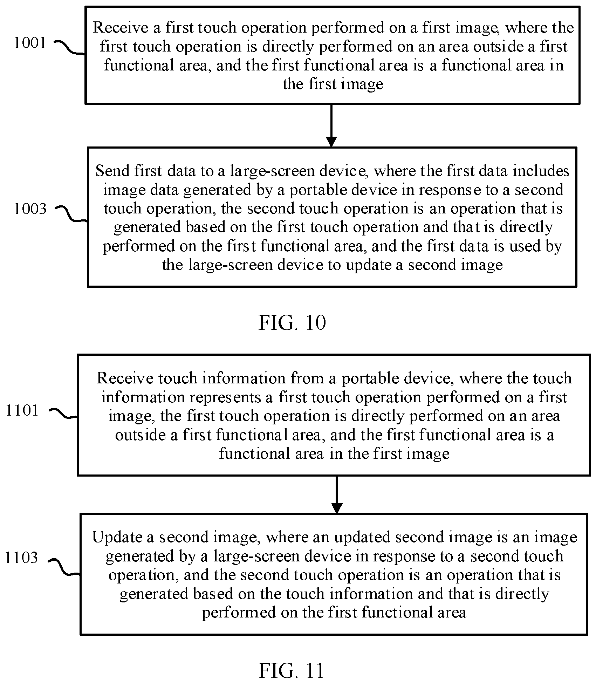

As shown in FIG. 10, the method includes the following steps.

Step 1001: Receive a first touch operation performed on the first image, where the first touch operation is directly performed on an area outside a first functional area, and the first functional area is a functional area in the first image.

Step 1003: Send first data to the large-screen device, where the first data includes image data generated by the portable device in response to a second touch operation, the second touch operation is an operation that is generated based on the first touch operation and that is directly performed on the first functional area, and the first data is used by the large-screen device to update the second image.

For details, refer to the foregoing descriptions of embodiments shown in FIG. 4A, FIG. 4B, FIG. 8C, FIG. 9A, FIG. 9C, and FIG. 5G. Details are not described herein again.

In some embodiments, the first image includes an initialization operation area. The initialization operation area is an area outside the first functional area. The first touch operation is a slide operation that is started from the initialization operation area. The slide operation passes through or reaches the first functional area. For details, refer to the foregoing descriptions of embodiments shown in FIG. 8C and FIG. 9A. Details are not described herein again.

In an example of these embodiments, dwell time of the slide operation in the first functional area is greater than a dwell time threshold.

In an example of these embodiments, a sliding speed of the slide operation in the first functional area is less than a sliding speed threshold.

In some embodiments, the first image includes a gesture operation area. The gesture operation area is an area outside the first functional area. The first touch operation is a touch operation performed on the gesture operation area. A distance between the first functional area and the gesture operation area is greater than a distance threshold, and/or a size of the first functional area is less than a size threshold.

For details, refer to the foregoing descriptions of embodiments shown in FIG. 8C and FIG. 9C. Details are not described herein again.

In some embodiments, the first image includes a frequent operation area. The frequent operation area is obtained based on historical touch operation data. The first touch operation is performed on a first area. The first area is an area of the frequent operation area except a functional area. A closeness degree of association between the first touch operation and the first functional area is greater than a closeness degree of association between the first touch operation and another functional area. The another functional area is a functional area, other than the first functional area, of the functional areas in the first image. For details, refer to the foregoing descriptions of embodiments shown in FIG. 8C and FIG. 5G. Details are not described herein again.

In an example of these embodiments, the closeness degree of association between the first touch operation and the first functional area is positively correlated to a size of the first functional area and negatively correlated to a first distance. The first distance is a distance between a touch point of the first touch operation and the first functional area. For details, refer to the foregoing descriptions of the attract force algorithm. Details are not described herein again.

In some embodiments, the second image includes a touch point of the first touch operation. For details, refer to the foregoing descriptions of embodiment shown in FIG. 9A. Details are not described herein again.

In the human-computer interaction method provided in this embodiment of this application, the portable device can convert a touch operation not directly performed on a functional area into a touch operation directly performed on the functional area, so that the portable device can be triggered to execute a corresponding function of the functional area, to generate image data. The image data may be used for updating an image displayed on the large-screen device. Therefore, when viewing the image displayed on the large-screen device, a user can quickly and accurately operate an application on the portable device. This improves operation experience of head-up interaction.

With reference to the foregoing embodiments and related accompanying drawings, an embodiment of this application provides another human-computer interaction method. The method may be performed by a large-screen device. The large-screen device is communicatively connected to a display device. The portable device displays a first image of an application. The large-screen device runs the application, and displays a second image of the application. Both the first image and the second image have functional areas. The functional areas in the first image one-to-one correspond to the functional areas in the second image.

As shown in FIG. 11, the method includes the following steps.

Step 1101: Receive touch information from the portable device, where the touch information represents a first touch operation performed on the first image, the first touch operation is directly performed on an area outside a first functional area, and the first functional area is a functional area in the first image.

Step 1103: Update the second image, where an updated second image is an image generated by the large-screen device in response to a second touch operation, and the second touch operation is an operation that is generated based on the touch information and that is directly performed on the first functional area.

For details, refer to the foregoing descriptions of embodiments shown in FIG. 4C, FIG. 8C, FIG. 9A, FIG. 9C, and FIG. 5G. Details are not described herein again.

In the human-computer interaction method provided in this embodiment of this application, the large-screen device can convert a touch operation not directly performed on a functional area into a touch operation directly performed on the functional area, so that the large-screen device can be triggered to execute a corresponding function of the functional area, to generate an image for updating an image displayed on the large-screen device. Therefore, when viewing the image displayed on the large-screen device, a user can quickly and accurately operate an application on the portable device. This improves operation experience of head-up interaction.

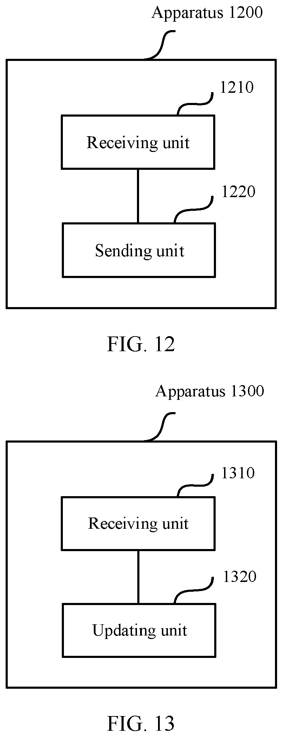

As shown in FIG. 12, an embodiment of this application provides a human-computer interaction apparatus 1200. A portable device is provided with the apparatus 1200. The portable device is communicatively connected to a large-screen device. The portable device runs an application, and displays a first image of the application. The large-screen device displays a second image of the application. Both the first image and the second image have functional areas. The functional areas in the first image one-to-one correspond to the functional areas in the second image.

As shown in FIG. 12, the apparatus 1200 includes a receiving unit 1210 and a sending unit 1220.

The receiving unit 1210 may be configured to receive a first touch operation performed on the first image. The first touch operation is directly performed on an area outside a first functional area. The first functional area is a functional area in the first image.

The sending unit 1220 is configured to send first data to the large-screen device. The first data includes image data generated by the portable device in response to a second touch operation. The second touch operation is an operation that is generated based on the first touch operation and that is directly performed on the first functional area. The first data is used by the large-screen device to update the second image.

In this embodiment of this application, the portable device and the like may be divided into functional modules based on embodiments shown in FIG. 4A, FIG. 4B, FIG. 8C, FIG. 9A, FIG. 9C, and FIG. 5G. For example, the functional modules may be divided based on corresponding functions, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

It should be noted that all related content of the steps in the foregoing method embodiments may be cited in function description of corresponding functional modules. Details are not described herein again.

According to the human-computer interaction apparatus provided in this embodiment of this application, the portable device can convert a touch operation not directly performed on a functional area into a touch operation directly performed on the functional area, so that the portable device can be triggered to execute a corresponding function of the functional area, to generate image data. The image data may be used for updating an image displayed on the large-screen device. Therefore, when viewing the image displayed on the large-screen device, a user can quickly and accurately operate an application on the portable device. This improves operation experience of head-up interaction.

As shown in FIG. 13, an embodiment of this application provides a human-computer interaction apparatus 1300. A large-screen device may be provided with the apparatus 1300. The large-screen device is communicatively connected to a display device. The portable device displays a first image of an application. The large-screen device runs the application, and displays a second image of the application. Both the first image and the second image have functional areas. The functional areas in the first image one-to-one correspond to the functional areas in the second image.

As shown in FIG. 13, the apparatus 1300 includes a receiving unit 1310 and an updating unit 1320.

The receiving unit 1310 is configured to receive touch information from the portable device. The touch information represents a first touch operation performed on the first image. The first touch operation is directly performed on an area outside a first functional area. The first functional area is a functional area in the first image.

The updating unit 1320 is configured to update the second image. An updated second image is an image generated by the large-screen device in response to a second touch operation. The second touch operation is an operation that is generated based on the touch information and that is directly performed on the first functional area.

In this embodiment of this application, the large-screen device and the like may be divided into functional modules based on embodiments shown in FIG. 4C, FIG. 8C, FIG. 9A, FIG. 9C, and FIG. 5G. For example, the functional modules may be divided based on corresponding functions, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

It should be noted that all related content of the steps in the foregoing method embodiments may be cited in function description of corresponding functional modules. Details are not described herein again.

According to the human-computer interaction apparatus provided in this embodiment of this application, the large-screen device can convert a touch operation not directly performed on a functional area into a touch operation directly performed on the functional area, so that the large-screen device can be triggered to execute a corresponding function of the functional area, to generate an image for updating an image displayed on the large-screen device. Therefore, when viewing the image displayed on the large-screen device, a user can quickly and accurately operate an application on the portable device. This improves operation experience of head-up interaction.

The foregoing mainly describes the apparatuses provided in embodiments of this application from a perspective of a method process. It may be understood that, to implement the foregoing functions, the portable device or the large-screen device includes a hardware structure and/or a software module for executing the corresponding functions. A person skilled in the art should easily be aware that, in combination with units and algorithm steps of the examples described in embodiments disclosed in this specification, this application may be implemented by hardware or a combination of hardware and computer software. Whether a function is executed by hardware or hardware driven by computer software depends on particular applications and design constraints of the technical solutions. A person skilled in the art may use different methods to implement the described functions for each particular application, but it should not be considered that the implementation goes beyond the scope of this application.

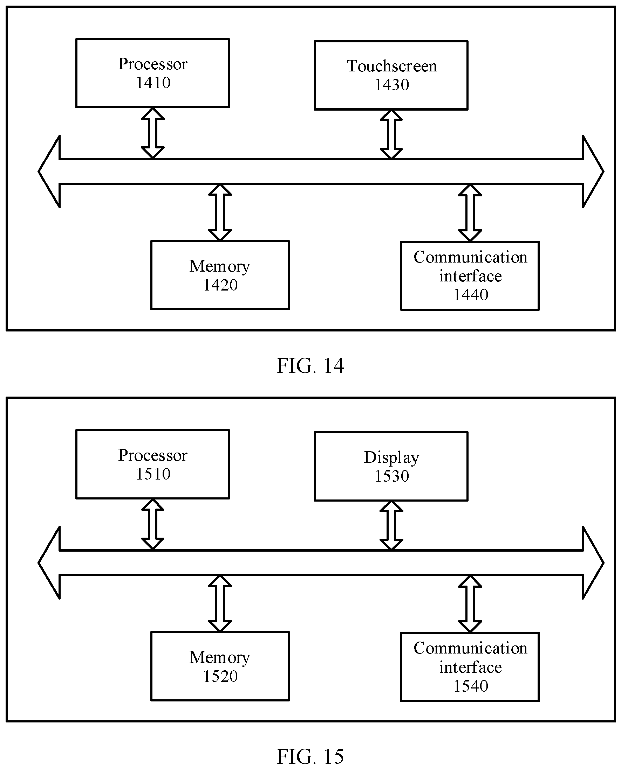

An embodiment of this application provides a portable device. As shown in FIG. 14, the portable device includes a processor 1410, a memory 1420, a touchscreen 1430, and a communication interface 1440. The memory 1420 is configured to store computer instructions. When the portable device runs, the processor 1410 executes the computer instructions, so that the portable device performs the method shown in FIG. 10. The processor 1410 is configured to instruct the touchscreen 1430 to receive a first touch operation performed on a first image. The first touch operation is directly performed on an area outside a first functional area. The first functional area is a functional area in the first image. The processor 1410 is further configured to instruct the communication interface 1440 to send first data to a large-screen device. The first data includes image data generated by the portable device in response to a second touch operation. The second touch operation is an operation that is generated based on the first touch operation and that is directly performed on the first functional area. The first data is used by the large-screen device to update a second image.

For specific implementations of parts/components of the portable device in this embodiment of this application, refer to the foregoing method embodiments and related accompanying drawings. Details are not described herein again.

Therefore, the portable device can convert a touch operation not directly performed on a functional area into a touch operation directly performed on the functional area, so that the portable device can be triggered to execute a corresponding function of the functional area, to generate image data. The image data may be used for updating an image displayed on the large-screen device. Therefore, when viewing the image displayed on the large-screen device, a user can quickly and accurately operate an application on the portable device. This improves operation experience of head-up interaction.

An embodiment of this application provides a large-screen device. As shown in FIG. 15, the large-screen device includes a processor 1510, a memory 1520, a display 1530, and a communication interface 1540. The memory 1520 is configured to store computer instructions. When the large-screen device runs, the processor 1510 executes the computer instructions, so that the large-screen device performs the method shown in FIG. 11. The processor 1510 is configured to instruct the communication interface 1540 to receive touch information from a portable device. The touch information represents a first touch operation performed on a first image. The first touch operation is directly performed on an area outside a first functional area. The first functional area is a functional area in the first image. The processor 1510 is configured to instruct the display 1530 to update a second image. An updated second image is an image generated by the large-screen device in response to a second touch operation. The second touch operation is an operation that is generated based on the touch information and that is directly performed on the first functional area.

For specific implementations of parts/components of the large-screen device in this embodiment of this application, refer to the foregoing method embodiments and related accompanying drawings. Details are not described herein again.

Therefore, the large-screen device can convert a touch operation not directly performed on a functional area into a touch operation directly performed on the functional area, so that the large-screen device can be triggered to execute a corresponding function of the functional area, to generate an image for updating an image displayed on the large-screen device. Therefore, when viewing the image displayed on the large-screen device, a user can quickly and accurately operate an application on the portable device. This improves operation experience of head-up interaction.

It may be understood that, the processor in embodiments of this application may be a central processing unit (central processing unit, CPU), the processor may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general purpose processor may be a microprocessor or any regular processor or the like.

The method steps in embodiments of this application may be implemented in a hardware manner, or may be implemented in a manner of executing software instructions by the processor. The software instructions may include corresponding software modules. The software modules may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium or write information into the storage medium. Certainly, the storage medium may be a component of the processor. The processor and the storage medium may be disposed in an ASIC.

All or a part of the foregoing embodiments may be implemented by using software, hardware, firmware, or any combination thereof. When the software is used for implementing embodiments, all or some of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instruction may be stored in a computer-readable storage medium, or may be transmitted by using the computer-readable storage medium. The computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like.

It may be understood that various numbers in embodiments of this application are merely used for differentiation for ease of description, and are not used to limit the scope of embodiments of this application.

**Claims**

1. A human-computer interaction method, applied to a portable device communicatively connected to a large-screen device, wherein the portable device runs an application, and displays a first image of the application, the large-screen device displays a second image of the application, and one or more functional areas in the first image one-to-one correspond to one or more functional areas in the second image; and the method comprises:

   receiving a first touch operation performed on the first image, wherein the first touch operation is directly performed on an area outside a first functional area, and the first functional area is a functional area in the first image; and
   sending first data to the large-screen device, wherein the first data comprises image data generated by the portable device in response to a second touch operation, the second touch operation is an operation that is generated based on the first touch operation and that is directly performed on the first functional area, and the first data is used by the large-screen device to update the second image.

2. The method according to claim 1, wherein the first image comprises an initialization operation area, the initialization operation area is an area outside the first functional area, the first touch operation is a slide operation that is started from the initialization operation area, and the slide operation passes through or reaches the first functional area.

3. The method according to claim 2, wherein dwell time of the slide operation in the first functional area is greater than a dwell time threshold.

4. The method according to claim 2, wherein a sliding speed of the slide operation in the first functional area is less than a sliding speed threshold.

5. The method according to claim 1, wherein the first image comprises a gesture operation area, the gesture operation area is an area outside the first functional area, and the first touch operation is a touch operation performed on the gesture operation area.

6. The method according to claim 1, wherein the first image comprises a frequent operation area, the frequent operation area is obtained based on historical touch operation data, the first touch operation is performed on a first area, and the first area is an area of the frequent operation area except a functional area.

7. The method according to claim 6, wherein a closeness degree of association between the first touch operation and the first functional area is greater than a closeness degree of association between the first touch operation and another functional area, and the another functional area is a functional area, other than the first functional area, of the functional areas in the first image; and
   the closeness degree of association between the first touch operation and the first functional area is positively correlated to a size of the first functional area and negatively correlated to a first distance, and the first distance is a distance between a touch point of the first touch operation and the first functional area.

8. The method according to claim 1, wherein the second image comprises a touch point of the first touch operation.

9. A human-computer interaction method, applied to a large-screen device communicatively connected to a portable device, wherein the portable device displays a first image of an application, the large-screen device runs the application, and displays a second image of the application, and one or more functional areas in the first image one-to-one correspond to one or more functional areas in the second image; and the method comprises:

   receiving touch information from the portable device, wherein the touch information represents a first touch operation performed on the first image, the first touch operation is directly performed on an area outside a first functional area, and the first functional area is a functional area in the first image; and

updating the second image, wherein an updated second image is an image generated by the large-screen device in response to a second touch operation, and the second touch operation is an operation that is generated based on the touch information and that is directly performed on the first functional area.

10. A portable device, comprising: a processor, a communication interface, and a touchscreen, wherein the communication interface is configured to connect to a large-screen device, the processor is configured to run an application, and instruct the touchscreen to display a first image of the application, the large-screen device displays a second image of the application, and one or more functional areas in the first image one-to-one correspond to one or more functional areas in the second image;

the processor is further configured to instruct the touchscreen to receive a first touch operation performed on the first image, wherein the first touch operation is directly performed on an area outside a first functional area, and the first functional area is a functional area in the first image; and

the processor is further configured to instruct the communication interface to send first data to the large-screen device, wherein the first data comprises image data generated by the portable device in response to a second touch operation, the second touch operation is an operation that is generated based on the first touch operation and that is directly performed on the first functional area, and the first data is used by the large-screen device to update the second image.

11. The portable device according to claim 10, wherein the first image comprises an initialization operation area, the initialization operation area is an area outside the first functional area, the first touch operation is a slide operation that is started from the initialization operation area, and the slide operation passes through or reaches the first functional area.

12. The portable device according to claim 11, wherein dwell time of the slide operation in the first functional area is greater than a dwell time threshold.

13. The portable device according to claim 11, wherein a sliding speed of the slide operation in the first functional area is less than a sliding speed threshold.

14. The portable device according to claim 10, wherein the first image comprises a gesture operation area, the gesture operation area is an area outside the first functional area, and the first touch operation is a touch operation performed on the gesture operation area.

15. The portable device according to claim 10, wherein the first image comprises a frequent operation area, the frequent operation area is obtained based on historical touch operation data, the first touch operation is performed on a first area, and the first area is an area of the frequent operation area except a functional area.

16. The portable device according to claim 15, wherein a closeness degree of association between the first touch operation and the first functional area is greater than a closeness degree of association between the first touch operation and another functional area, and the another functional area is a functional area, other than the first functional area, of the functional areas in the first image; and the closeness degree of association between the first touch operation and the first functional area is positively correlated to a size of the first functional area and negatively correlated to a first distance, and the first distance is a distance between a touch point of the first touch operation and the first functional area.

17. The portable device according to claim 10, wherein the second image comprises a touch point of the first touch operation.

18. A computer device, comprising a processor, a communication interface, and a display, wherein the communication interface is configured to connect to a portable device, the portable device displays a first image of an application, the processor is configured to run the application, and instruct the display to display a second image of the application, and one or more functional areas in the first image one-to-one correspond to one or more functional areas in the second image;

the processor is further configured to instruct the communication interface to receive touch information from the portable device, wherein the touch information represents a first touch operation performed on the first image, the first touch operation is directly performed on an area outside a first functional area, and the first functional area is a functional area in the first image; and

the processor is further configured to instruct the display to update the second image, wherein an updated second image is an image generated by a large-screen device in response to a second touch operation, and the second touch operation is an operation that is generated based on the touch information and that is directly performed on the first functional area.

19. A computer storage medium, wherein the computer storage medium comprises computer instructions, and when the computer instructions are run on an electronic device, the electronic device is enabled to perform the method according to any one of claims 1 to 8 or the method according to claim 9.

20. A computer program product, wherein when program code comprised in the computer program product is executed by a processor in an electronic device, the method according to any one of claims 1 to 8 or the method according to claim 9 is implemented.

FIG. 1

Portable device 100

Antenna 1

Antenna 2

| Mobile communication module<br>2G/3G/4G/5G<br>[150] | Wireless communication module<br>BT/WLAN/GNSS/NFC/IR/FM<br>[160] |

Speaker [170A]

Receiver [170B]

Microphone [170C]

Headset jack [170D]

Audio module [170]

Displays 1 to N [194]

Cameras 1 to N [193]

Indicator [192]

Motor [191]

Button [190]

Internal memory [121]

SIM card interfaces 1 to N [195]

External memory interface [120]

Processor [110]

Sensor module [180]

Pressure sensor [180A]

Gyroscope sensor [180B]

Barometric pressure sensor [180C]

Magnetic sensor [180D]

Acceleration sensor [180E]

Distance sensor [180F]

Optical proximity sensor [180G]

Fingerprint sensor [180H]

Temperature sensor [180J]

Touch sensor [180K]

USB interface [130]

Charging input

Charging management module [140]

Power management module [141]

Battery [142]

Ambient light sensor [180L]

Bone conduction sensor [180M]

FIG. 2

FIG. 3

EP 4 108 524 A1

FIG. 4A

FIG. 4B

FIG. 4C

FIG. 5A

FIG. 5B

FIG. 5C

FIG. 5D

EP 4 108 524 A1

FIG. 5E

FIG. 5F

FIG. 5G

| Down | Move | ... | Move | Up |
|------|------|-----|------|-----|

FIG. 6

```
┌─────────────────────┐        ┌─────────────────────┐
│ Collect running     │        │ Obtain user touch big│
│ screens             │        │ data of each of the  │
│ of each of a        │        │ plurality of         │
│ plurality of        │        │ applications         │
│ applications in     │        │ in the different     │
│ different           │        │ scenarios            │
│ scenarios           │        │                      │
└─────────────────────┘        └─────────────────────┘
          │                              │
          ▼                              ▼
┌─────────────────────┐        ┌─────────────────────┐
│ Determine           │        │                      │
│ identification      │        │ Cluster user touch   │
│ patterns of each of │        │ big data in each     │
│ the plurality of    │        │ scenario             │
│ applications in the │        │                      │
│ different scenarios │        │                      │
└─────────────────────┘        └─────────────────────┘
          │                              │
          ▼                              ▼
┌─────────────────────┐  ┌─────────────────────┐  ┌─────────────────────┐
│ Determine ROI       │  │ Determine a frequent │  │ Preset a shortcut    │
│ layout              │  │ operation area based │  │ gesture              │
│ information of each │  │ on a clustering      │  │ and a correspondence │
│ application in the  │  │ result corresponding │  │ between the shortcut │
│ different scenarios │  │ to each scenario     │  │ gesture and an ROI   │
└─────────────────────┘  └─────────────────────┘  └─────────────────────┘
          │                        │                        │
          └────────────────────────┼────────────────────────┘
                                   ▼
                         ┌─────────────────────┐
                         │ Stored in a          │
                         │ configuration file   │
                         └─────────────────────┘
```

FIG. 7A

Determine ROI layout information of an application A in a plurality of scenarios

Main battle scenario

Equipment purchase scenario

Setting scenario

Match details scenario

Personal details scenario

Set of scenarios of the application A

Set of ROIs of the application A

The ROIs in the main battle scenario include: an attack key, a turret destroy key, a last hit key, and a recovery key...

The ROIs in the setting scenario include: a close key...

⋮

Identification patterns of the scenarios of the application A

The identification patterns in the main battle scenario include: an attack key and a gold coin

The ROIs in the setting scenario include: a text pattern of "setting"

⋮

FIG. 7B

Determine a frequent operation area of an application A in a plurality of scenarios

Touch data of a plurality of users in different scenarios → User touch big data of the application A →

Set of frequent operation areas of the application A

The frequent operation area in a main battle scenario includes: a nearby area of an attack key, a turret destroy key, and a last hit key

The frequent operation area in a setting scenario includes: a nearby area of a close key

⋮

FIG. 7C

Generation and management of a configuration file

Set of ROIs of an application

Set of frequent operation areas of the application

Set of identification patterns of scenarios

Preset rule set

Pushed by a server

Generation and update of the configuration file

FIG. 7D

Enhanced service module

Configuration file
management
submodule

Running image
obtaining
submodule

Enhanced
management
submodule

Touch event
obtaining
submodule

801a: Determine ROI layout information in a scenario corresponding to a running
image, and generate an auxiliary touch layer based on the ROI layout information
801b: Determine whether an obtained touch event is a valid touch event, and
when the obtained touch event is not a valid touch event, generate a new touch
event by using an auxiliary touch policy

FIG. 8A

Generation of an auxiliary touch layer

ROI layout information and
frequent operation area in a
scenario corresponding to a
recently obtained running image

Current auxiliary
touch layer

Sequence of subevents in a
recently obtained touch event

FIG. 8B

Auxiliary touch policy

```
┌─────────────────────┐
│  Touch event        │
│  corresponding to a │
│  touch operation    │
└─────────────────────┘
           │
           ▼
┌─────────────────────┐        ┌──────────────────────┐    ┌──────────────────────┐
│  Sequence of        │        │ Recognize a target   │    │ Generate a down      │
│  subevents in the   │        │ ROI of a slide       │───▶│ event for the target │
│  touch event        │───▶    │ operation            │    │ ROI                  │
│  corresponding to the│       └──────────────────────┘    └──────────────────────┘
│  touch operation    │
└─────────────────────┘        ┌──────────────────────┐    ┌──────────────────────┐
                               │ Determine a shortcut │    │ Generate a down      │
                               │ gesture              │───▶│ event for an ROI     │
                               └──────────────────────┘    │ corresponding to the │
                                                           │ shortcut gesture     │
                               ┌──────────────────────┐    └──────────────────────┘
                               │ When the touch       │
                               │ operation is an      │    ┌──────────────────────┐
                               │ operation performed  │    │ Generate a down      │
                               │ on an attract area,  │───▶│ event for the target │
                               │ determine a target   │    │ ROI                  │
                               │ ROI for the user     │    └──────────────────────┘
                               │ operation            │
                               └──────────────────────┘
```

┌──────────────────────┐
│ Transfer the         │
│ down event to an     │
│ application A         │
└──────────────────────┘

EP 4 108 524 A1

FIG. 8C

FIG. 9A

EP 4 108 524 A1

FIG. 9B

EP 4 108 524 A1

FIG. 9C

EP 4 108 524 A1

1001

Receive a first touch operation performed on a first image, where the first touch operation is directly performed on an area outside a first functional area, and the first functional area is a functional area in the first image

1003

Send first data to a large-screen device, where the first data includes image data generated by a portable device in response to a second touch operation, the second touch operation is an operation that is generated based on the first touch operation and that is directly performed on the first functional area, and the first data is used by the large-screen device to update a second image

FIG. 10

1101

Receive touch information from a portable device, where the touch information represents a first touch operation performed on a first image, the first touch operation is directly performed on an area outside a first functional area, and the first functional area is a functional area in the first image

1103

Update a second image, where an updated second image is an image generated by a large-screen device in response to a second touch operation, and the second touch operation is an operation that is generated based on the touch information and that is directly performed on the first functional area

FIG. 11

Apparatus 1200

```
┌──────────────────────────────┐
│                          1210 │
│    ┌──────────────────┐       │
│    │  Receiving unit  │       │
│    └──────────────────┘       │
│              │           1220 │
│    ┌──────────────────┐       │
│    │   Sending unit   │       │
│    └──────────────────┘       │
│                              │
└──────────────────────────────┘
```

FIG. 12

Apparatus 1300

```
┌──────────────────────────────┐
│                          1310 │
│    ┌──────────────────┐       │
│    │  Receiving unit  │       │
│    └──────────────────┘       │
│              │           1320 │
│    ┌──────────────────┐       │
│    │  Updating unit   │       │
│    └──────────────────┘       │
│                              │
└──────────────────────────────┘
```

FIG. 13

| Processor 1410 | Touchscreen 1430 |
|---|---|

| Memory 1420 | Communication interface 1440 |
|---|---|

FIG. 14

| Processor 1510 | Display 1530 |
|---|---|

| Memory 1520 | Communication interface 1540 |
|---|---|

FIG. 15

## INTERNATIONAL SEARCH REPORT

| International application No. |
|---|
| **PCT/CN2021/074087** |

| A. | CLASSIFICATION OF SUBJECT MATTER |
|---|---|
| | B60R 16/023(2006.01)i |

According to International Patent Classification (IPC) or to both national classification and IPC

| B. | FIELDS SEARCHED |
|---|---|

Minimum documentation searched (classification system followed by classification symbols)

　　B60R

Documentation searched other than minimum documentation to the extent that such documents are included in the fields searched

Electronic data base consulted during the international search (name of data base and, where practicable, search terms used)

　　CNABS, CNTXT, VEN, USTXT, WOTXT, EPTXT, CNKI: 大屏, 投屏, 触摸, 触控, 显示, 图像, 手势, 位置, large screen, project, touch, display, image, gesture, position

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 109177899 A (SHANGHAI TIANMA MICROELECTRONICS CO., LTD.) 11 January 2019 (2019-01-11)<br>　　description, paragraphs 36-73, and figures 2-11 | 1-20 |
| A | CN 108108082 A (NUBIA TECHNOLOGY CO., LTD.) 01 June 2018 (2018-06-01)<br>　　entire document | 1-20 |
| A | CN 107305466 A (XI'AN ZHONGXING NEW SOFTWARE COMPANY LIMITED) 31 October 2017 (2017-10-31)<br>　　entire document | 1-20 |
| A | US 8368658 B2 (AT&T MOBILITY II LLC.) 05 February 2013 (2013-02-05)<br>　　entire document | 1-20 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **21 April 2021** | **28 April 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/074087**

| Patent document cited in search report | | | Publication date (day/month/year) | Patent family member(s) | | | Publication date (day/month/year) |
|---|---|---|---|---|---|---|---|
| CN | 109177899 | A | 11 January 2019 | None | | | |
| CN | 108108082 | A | 01 June 2018 | None | | | |
| CN | 107305466 | A | 31 October 2017 | WO | 2017181540 | A1 | 26 October 2017 |
| US | 8368658 | B2 | 05 February 2013 | US | 2010134423 | A1 | 03 June 2010 |

Form PCT/ISA/210 (patent family annex) (January 2015)

**EP 4 108 524 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010177769